# EUROPÄISCHE PATENTSCHRIFT

(11) **EP 3 036 088 B1**
(45) Veröffentlichungstag und Bekanntmachung des Hinweises auf die Patenterteilung: **22.03.2017**
(21) Anmeldenummer: 15766416.0
(22) Anmeldetag: 28.08.2015
(51) Int. Cl.: B29C 67/00

(54) **VERFAHREN UND VORRICHTUNG ZUM ENTPACKEN EINES BAUTEILS**
METHOD AND DEVICE FOR UNPACKING A COMPONENT
PROCÉDÉ ET DISPOSITIF D'EXTRACTION D'UN ÉLÉMENT DE CONSTRUCTION

(30) Priorität: 29.08.2014 DE 102014112446
(43) Veröffentlichungstag der Anmeldung: 29.06.2016
(73) Patentinhaber: ExOne GmbH, 86368 Gersthofen (DE)
(72) Erfinder: HÖCHSMANN, Rainer, 86863 Langenneufnach (DE); MÜLLER, Alexander, 86420 Diedorf-Vogelsang (DE); KLAUA,Sven, 86161 Augsburg (DE); BAUMANN, Maximilian, 86154 Augsburg (DE); SEEGER, Wolfgang, 86199 Augsburg (DE); RATZENBERGER, Renate, 89343 Jettingen-Scheppach (DE); HUBER, Lisa, 86316 Friedberg (DE)
(74) Vertreter: Viering, Jentschura & Partner mbB Patent- und Rechtsanwälte
(86) Internationale Anmeldenummer: PCT/EP2015/069796
(87) Internationale Veröffentlichungsnummer: WO 2016/030530

(56) Entgegenhaltungen:
- EP-A2- 2 543 498
- WO-A1-2011/067359
- WO-A1-2014/009376
- DE-A1-102012 106 141

## Beschreibung

Die vorliegende Erfindung betrifft ein Verfahren gemäß der Präambel von Anspruch 1. Ein derartiges Verfahren ist z.B. bekannt aus der WO 2011/067359 A1 oder der WO 2014/009376 A1. Insbesondere betrifft die vorliegende Erfindung ein Verfahren und eine Vorrichtung zum Entpacken eines mittels eines generativen Fertigungsverfahrens hergestellten Bauteils aus einer Partikelmaterial-Schüttung aus nicht-verfestigtem Partikelmaterial, welche gemeinsam mit dem Bauteil in einem Aufnahmeraum angeordnet ist, der umfangsseitig von einer nach oben hin offenen, vertikalen Umfangswandstruktur einer Baubox begrenzt wird/ist, in der eine höhenverstellbare Bauplattform aufgenommen ist, auf der die das Bauteil enthaltende Partikelmaterial-Schüttung angeordnet ist.

Es gibt zahlreiche generative Fertigungsverfahren, bei denen das zu fertigende Bauteil schichtweise aus Partikelmaterial/Pulvermaterial aufgebaut wird. Nacheinander werden einzelne Schichten aus Partikelmaterial vollflächig auf zum Beispiel eine Bauplattform aufgebracht. Die jeweilige Partikelmaterialschicht wird dabei selektiv in einem vorbestimmten Teilbereich davon verfestigt, so dass das Bauteil aus selektiv verfestigten, übereinander liegenden und sich zumindest teilweise überlappenden Teilbereichen aufgebaut werden kann. Die Fertigung kann dabei in einer wie eingangs beschrieben ausgebildeten Baubox erfolgen, deren vertikale Umfangswandstruktur über der Bauplattform einen sog. Bauraum definiert, wenn sich die Baubox zum Aufbauen des Bauteils in einem dem zugehörigen 3D-Drucker befindet.

Als Beispiele von generativen Fertigungsverfahren seien z.B. das selektive Aufdrucken von Bindemittel (zum Beispiel einer Bindemittelkomponente eines Mehrkomponenten-Bindemittels) oder das selektive Lasersintern genannt. Generative Fertigungsverfahren (oder "schichtweise Herstellungsverfahren") umfassen neben dem sog. Rapid Prototyping z.B. auch ein sog. Rapid Tooling oder ein sog. Rapid Manufacturing.

Das herzustellende Bauteil kann zum Beispiel eine Gussform oder ein Gießkern sein. Das Partikelmaterial kann zum Beispiel Sand sein. Es sollte jedoch verständlich sein, dass auch ein anderes Partikelmaterial verwendet werden kann und zudem andere Bauteile mit einem jeweiligen generativen Fertigungsverfahren herstellbar sind.

Infolge der selektiven Verfestigung einer jeweiligen Schicht werden bei der schichtweisen Herstellung von derartigen pulverbasierten Bauteilen die herzustellenden Gegenstände während des Bauprozesses in loses, nicht-verfestigtes Partikelmaterial eingebettet. Mit anderen Worten ist das (zumindest eine) Bauteil gegen Ende des Bauprozesses von einer Partikelmaterial-Schüttung aus losem, nicht-verfestigten Partikelmaterial (zumindest teilweise) umgeben.

Dies kann Vorteile haben dahingehend, dass das Bauteil während seiner Fertigung von dem losen, nicht-verfestigten Partikelmaterial gestützt wird. Nach dem Herstellungsprozess muss das Bauteil jedoch aus der Partikelmaterial-Schüttung entnommen bzw. von dem losen, nicht-verfestigten Partikelmaterial abgetrennt werden. Dies wird als sog. "Entpacken" des Bauteils bezeichnet. An das sog. Entpacken des Bauteils kann sich eine (Fein-)Reinigung desselben anschließen, um an dem Bauteil anhaftende Partikelmaterial-Reste zu entfernen. Nicht-verfestigtes Partikelmaterial (oder "ungebundenes" Partikelmaterial) bezeichnet dabei Partikelmaterial außerhalb des verfestigten Teilbereichs einer jeweiligen Schicht, d.h. zum Beispiel Partikelmaterial außerhalb des Druck- oder Sinterbereichs einer jeweiligen Schicht bzw. nichtbedrucktes oder nicht-gesintertes Partikelmaterial.

Es sind zahlreiche Verfahren zum Entpacken von derartigen pulverbasierten Bauteilen bekannt.

Das Entpacken kann zum Beispiel durch Absaugen von dem losen Partikelmaterial mit einem leistungsstarken Sauger erfolgen. Dazu wird nach der Fertigstellung des Bauteils bzw. nach Beendigung des Bauprozesses ein erster Gegenstand mit einer geeigneten Absaugvorrichtung (zum Beispiel einer sog. Sauglanze oder einem Saugschlauch) von oben soweit freigelegt, bis er zum Beispiel per Hand aus der Baubox entnommen werden kann. Danach wird der nächste Gegenstand freigesaugt, entnommen usw. Ein Bediener muss in diesem Fall alle Bauteile sequentiell freilegen und entnehmen. Ggf. können auch mehrere Bauteile in einer Ebene gleichzeitig freigesaugt werden und dann entnommen werden.

Nachteilig ist dabei die zeitaufwändige Absaugung des losen Partikelmaterials mittels der Saugvorrichtung. Dies gilt vor allem für den Fall eines großen Bauraums bzw. einer großen Baubox, in dem/der ein großes Volumen von nicht-verfestigtem Partikelmaterial aufgenommen ist. Insbesondere bei der manuellen Absaugung besteht darüber hinaus die Gefahr, dass Gegenstände durch Berührung mit der Absaugvorrichtung beschädigt werden können. Eine Automatisierung des Saugvorgangs, zum Beispiel in der Form, dass die Absaugung des Partikelmaterials mittels Roboterarm erfolgt, ist nur mit hohem Aufwand möglich, da für neue Gegenstände neue aufwändige Ablaufprogrammierungen im Roboter notwendig sind. Ein weiterer Nachteil der Absaugmethode besteht darin, dass das Partikelmaterial nach dem Absaugen nur mit viel Aufwand in einem Behälter gesammelt und rückgewonnen werden kann. Dies erfolgt üblicherweise in einem Separator bzw. einer geeigneten Trennvorrichtung, welche das Partikelmaterial von dem Saugstrom/Luftstrom abtrennt. Ein weiterer Nachteil besteht darin, dass sämtliche Komponenten, die mit dem abzusaugendem Partikelmaterial in Berührung kommen (zum Beispiel Absauglanze, Saugschlauch, Separator, etc.), einem starken Verschleiß unterliegen, insbesondere bei stark abrasivem Partikelmaterial wie zum Beispiel Sand.

Wie eingangs erwähnt, kann das Bauteil zum Beispiel auf einer sog. Bauplattform aufgebaut werden, so dass die Partikelmaterial-Schüttung und das darin aufgenommene Bauteil am Ende des Bauprozesses auf der Bauplattform angeordnet sind. Die Bauplattform kann wiederum in einer sog. Baubox aufgenommen sein. Für ausreichend/zweckmäßig rieselfähiges Partikelmaterial bzw. in dem Fall einer ausreichend/zweckmäßig rieselfähigen Partikelmaterial-Schüttung kann es ausreichend sein, zum Entpacken des Bauteils aus der Partikelmaterial-Schüttung in der Bauplattform ausgebildete, selektiv verschließbare Durchgangsöffnungen zu öffnen, so dass das lose Partikelmaterial nach unten aus dem Aufnahmeraum der Baubox heraus fällt/rieselt. In vielen Fällen kann das Partikelmaterial auf diese Art ausreichend abfließen/ausrieseln. Bei Bedarf, zum Beispiel in dem Fall, dass das lose Partikelmaterial lediglich in einem Bereich unmittelbar oberhalb der jeweiligen Öffnung abfließt, so dass es zur Ausbildung von Hohlräumen oberhalb der jeweiligen Öffnung kommt (sog. "Brückenbildung" über der jeweiligen Öffnung), kann das Partikelmaterial zusätzlich aufgelockert werden, zum Beispiel mittels Vibration und/oder durch Anblasen mit Luft, und/oder ein Saugstrom verwendet werden, um das Partikelmaterial durch die Durchgangsöffnungen hindurch abzusaugen.

Zum Beispiel offenbart WO 2007/139938 A2 (siehe dort insbesondere die Figuren 3A - 3C) die Verwendung zweier mit vertikalem Abstand zueinander angeordneter Lochplatten, deren Löcher in horizontaler Richtung versetzt zueinander angeordnet sind. Nach dem Aufbauen des Objekts wird an der Unterseite der unteren Lochplatte ein Vakuum angelegt und das Partikelmaterial so nach unten hin abgesaugt. Die untere Lochplatte kann ferner in horizontaler Richtung relativ zu der oberen Lochplatte bewegbar ausgebildet sein, um die Löcher zueinander auszurichten. Mit anderen Worten wird von der oberen Lochplatte eine Bauplattform mit Auslass-Öffnungen gebildet, wobei die Auslass-Öffnungen durch die versetzt angeordnete untere Lochplatte verschlossen sind (während des Bauprozesses). Nachteilig bei dieser Ausführungsform ist zum einen das Erfordernis eines ausreichend starken Saugstroms und zum anderen eine relativ komplexe Bauplattform-Struktur.

Auch US 2008/0241404 A1 offenbart eine Bauplattform, die ausgebildet ist, um nicht verfestigtes Partikelmaterial durch die Bauplattform hindurch nach unten hin aus der Baukammer heraus abzulassen. Siehe dort zum Beispiel die Figur 1. Gemäß US 2008/0241404 A1 weist die Bauplattform ein Gitterelement auf, dessen Öffnungen während des Bauprozesses von unteren Klappen verschlossen werden/sind. Durch Öffnen der Klappen nach dem Bauprozess kann nicht verfestigtes Partikelmaterial aus der Baukammer abgelassen werden.

US 2002/0090410 A1 offenbart ein Entpackungs-Verfahren, bei dem durch die seitliche Bauraumwand bzw. die vertikale Umfangswandung des Bauraums hindurch einerseits seitlich Luft eingeblasen (auf einer ersten Seite) und andererseits Baumaterial seitlich abgesaugt wird (auf einer der ersten Seite gegenüberliegenden zweiten Seite). Gemäß US 2002/0090410 A1 wird nicht-verfestigtes Partikelmaterial also seitlich abgesaugt, kombiniert mit einem seitlichen Anblasen des nicht-verfestigten Partikelmaterials. Hierzu muss die Seitenwand entsprechend hoch dimensioniert werden, da die seitlichen Öffnungen zum Einblasen/Absaugen während des Bauprozesses unterhalb der Bauplattform positioniert sein sollten.

Ein weiteres Entpackungs-Verfahren ist aus der WO 2005/025780 bekannt. Dieses Dokument schlägt vor, die Bauplattform nach der Herstellung des Bauteils in eine Absaugposition zu verfahren und das Bauteil anschließend mittels eines seitlichen Saugstroms zu entpacken, wodurch ein Entfernen des nicht-verfestigten Aufbaumaterials und eine Kühlung des Formkörpers und des Trägers bzw. der Bauplattform erfolgen sollen. Auch hier muss die Seitenwand entsprechend hoch dimensioniert werden.

WO 01/10631 A2 schließlich offenbart eine Bauplattform, die porös ausgebildet ist, wobei durch die Poren bzw. Öffnungen von unten ein Gas eingeblasen wird, welches eine Art Wirbelbett erzeugt und das das hergestellte Objekt umgebende Partikelmaterial auflockert. Das lose, aufgelockerte Partikelmaterial wird nach oben hin aus dem Bauraum entfernt, insbesondere durch ein nach oben Fahren der Bauplattform in Verbindung mit einem Kippen des Bauraums. Siehe zum Beispiel Figuren 3 und 4 der WO 01/10631 A2. Das Kippen des Bauraums kann bei Vorliegen eines Wirbelbetts dazu führen, dass die Bauteile in der Wirbelschicht wandern und zum Beispiel gegeneinander oder gegen eine Umfangswand des Bauraums prallen/stoßen, was eine Beschädigung der Bauteile bewirken kann.

Es kann als eine Aufgabe der Erfindung angesehen werden, ein Verfahren und/oder eine Vorrichtung anzugeben, welche ein einfaches aber dennoch zuverlässiges Entfernen/Entpacken des Bauteils aus der Partikelmaterialschüttung ermöglichen, zum Beispiel auch für einen großen Bauraum bzw. eine große Baubox.

Die Erfindung stellt ein Verfahren zum Entpacken eines Bauteils gemäß Anspruch 1 bereit. Weitere Ausführungsformen des erfindungsgemäßen Verfahrens sind in den abhängigen Ansprüchen 2 bis 11 beschrieben. Die Ansprüche 12 und 13 beschreiben an das erfindungsgemäße Entpackungs-Verfahren angepasste Fertigungsverfahren. Anspruch 14 beschreibt eine erfindungsgemäße Vorrichtung zum Entpacken eines Bauteils, und Anspruch 15 beschreibt eine weitere Ausgestaltung der erfindungsgemäßen Vorrichtung.

Gemäß verschiedenen Ausführungsformen werden ein Verfahren und/oder eine Vorrichtung bereitgestellt, welche ein einfaches aber dennoch zuverlässiges Entfernen/Entpacken des Bauteils aus der Partikelmaterialschüttung ermöglichen, zum Beispiel auch für einen großen Bauraum bzw. eine große Baubox.

Gemäß verschiedenen Ausführungsformen werden ein Verfahren und/oder eine Vorrichtung bereitgestellt, die ein Entpacken des Bauteils derart ermöglichen, dass die Baubox, in deren Aufnahmeraum das gefertigte Bauteil und die Partikelmaterialschüttung aufgenommen sind, schnell für einen nächsten Baujob zur Verfügung steht.

Gemäß verschiedenen Ausführungsformen werden ein Verfahren und/oder eine Vorrichtung bereitgestellt, die für eine strukturell einfach gehaltene Baubox geeignet sind.

Gemäß verschiedenen Ausführungsformen werden ein Verfahren und/oder eine Vorrichtung bereitgestellt, mit denen das Entpacken des Bauteils aus der Partikelmaterialschüttung leicht/einfach zu automatisieren ist bzw. gesteuert ablaufen kann, d.h. die ein teilweise automatisiertes oder vollautomatisiertes Entpacken des Bauteils ermöglichen.

Gemäß verschiedenen Ausführungsformen werden ein Verfahren und/oder eine Vorrichtung bereitgestellt, welche ein schnelles Entpacken des Bauteils aus der Partikelmaterialschüttung ermöglichen, zum Beispiel auch für einen großen Bauraum bzw. eine große Baubox.

Gemäß verschiedenen Ausführungsformen werden ein Verfahren und/oder eine Vorrichtung bereitgestellt, welche ein kostengünstiges Entpacken des Bauteils aus der Partikelmaterialschüttung ermöglichen, zum Beispiel auch für einen großen Bauraum bzw. eine große Baubox.

Gemäß verschiedenen Ausführungsformen werden ein Verfahren und/oder eine Vorrichtung bereitgestellt, mit denen das von dem Bauteil abgetrennte Partikelmaterial leicht zu sammeln ist, z.B. um das Partikelmaterial wieder zu verwenden.

Gemäß verschiedenen Ausführungsformen werden ein Verfahren und/oder eine Vorrichtung bereitgestellt, mit denen ein beim Entpacken auftretender Verschleiß von mit dem Partikelmaterial in Berührung kommenden Vorrichtungen gering gehalten werden kann.

Gemäß verschiedenen Ausführungsformen werden ein Verfahren und/oder eine Vorrichtung bereitgestellt, mit denen das Entpacken in einer vergleichsweise niedrigen Baubox erfolgen kann.

Die Erfindung beschreibt ein Verfahren zum Entpacken eines mittels eines generativen Fertigungsverfahrens hergestellten Bauteils (zum Beispiel mehrerer Bauteile) aus einer Partikelmaterial-Schüttung aus nicht-verfestigtem Partikelmaterial, welche gemeinsam mit dem Bauteil in einem Aufnahmeraum angeordnet ist, der umfangsseitig von einer nach oben hin offenen, vertikalen Umfangswandstruktur einer Baubox begrenzt wird, in der eine höhenverstellbare Bauplattform aufgenommen ist, auf der die das Bauteil enthaltende Partikelmaterial-Schüttung angeordnet ist.

Die Baubox kann zum Beispiel eine mobile Baubox sein, die zwischen mehreren Positionen hin und her verfahrbar ist. Hierzu kann die Baubox zum Beispiel mit einem eigenen Baubox-Fahrantrieb ausgestattet sein. Eine dieser Positionen kann eine Baubox-Bauposition in einem 3D-Drucker sein, der das generative Fertigungsverfahren ausführt, in welcher Position die Baubox einen Bauraum bildet, in dem das herzustellende Bauteil gefertigt/aufgebaut wird. Eine andere Position kann eine Baubox-Entpackungs-Position sein, die sich zum Beispiel außerhalb des 3D-Druckers befindet und in die die Baubox verfahren wird, um das Bauteil aus der Baubox zu entnehmen. Zwischen den genannten zwei Positionen kann zum Beispiel zumindest abschnittsweise ein Fördersystem (zum Beispiel in Form einer Rollenbahn und/oder einer Schienenstruktur) für die Baubox vorgesehen sein.

Die Baubox kann zum Beispiel mit einem eigenen Bauplattform-Hubantrieb ausgestattet sein, mit dem die höhenverstellbare Bauplattform abgesenkt und angehoben werden kann. Alternativ kann ein solcher Bauplattform-Hubantrieb aber auch an einer jeweils benötigten Position vorgesehen sein, also zum Beispiel an der Baubox-Bauposition und an der Baubox-Entpackungs-Position. In diesem Fall können mehrere Bauboxen denselben Hubantrieb gemeinsam nutzen.

Die vertikale Umfangswandstruktur der Baubox kann in der Draufsicht zum Beispiel rechteckig sein, zum Beispiel mit zwei langen und zwei kurzen Seiten.

Die Bauplattform kann zum Beispiel Durchgangsloch-frei ausgebildet sein und/oder beim Entpacken des Bauteils in der Baubox verbleiben (d.h. sie wird beim Entpacken nicht aus der Baubox entnommen).

Das Bauteil kann zum Beispiel mittels eines Bindemittel-Druckverfahrens hergestellt sein, bei dem Bindemittel (zum Beispiel eine Bindemittelkomponente eines Mehrkomponenten-Bindemittels) selektiv auf eine zuvor aufgebrachte Schicht aus Partikelmaterial aufgedruckt wird, oder alternativ zum Beispiel mittels selektiven Lasersinterns. Es sind aber auch andere generative Fertigungsverfahren denkbar/möglich, insbesondere pulverbasierte Fertigungsverfahren. Derartige Fertigungsverfahren sind dem Fachmann wohl bekannt und zum Beispiel in den eingangs erwähnten Dokumenten beschrieben.

Zum Beispiel kann nach dem Aufbringen einer ersten Partikelmaterialschicht auf die Bauplattform mittels eines sog. Beschichters die erste Partikelmaterialschicht selektiv in einem Teilbereich davon verfestigt werden, zum Beispiel durch Aufdrucken eines geeigneten Bindemittels, zum Beispiel mittels einer geeigneten Druckvorrichtung. Anschließend kann die Bauplattform um eine Schichtdicke nach unten abgesenkt werden, eine zweite Partikelmaterialschicht auf die erste Partikelmaterialschicht aufgebracht werden, und die zweite Partikelmaterialschicht selektiv in einem Teilbereich davon verfestigt werden. Diese Schritte können solange wiederholt werden, bis das Bauteil fertiggestellt ist. Eine geeignete Druckvorrichtung, ein geeigneter Beschichter, eine geeignete Baubox und eine geeignete Anlage zur Verwendung in einem solchen Verfahren sind z.B. in den folgenden Anmeldungen/Patenten beschrieben, deren Offenbarungsgehalt durch diese Bezugnahme hierin mitaufgenommen ist: DE 10 2009 056 695, DE 10 2009 056 688, DE 10 2009 056 689, DE 10 2009 056 686, DE 10 2009 056 696, DE 10 2009 056 694 und DE 10 2009 056 687.

Am Ende des Bauprozesses/Herstellungsprozesses ist von der Baubox in deren Bauraum bzw. Aufnahmeraum eine Partikelmaterial-Schüttung aus nicht-verfestigtem Partikelmaterial aufgenommen, in der die ein oder mehreren Bauteile enthalten bzw. eingebettet sind. Mit anderen Worten ist das mindestens eine Bauteil zumindest teilweise von der Partikelmaterial-Schüttung umgeben. Mehrere Bauteile können zum Beispiel in einer gemeinsamen horizontalen Lage oder Ebene innerhalb des Bauraums angeordnet sein (in welchem Fall sie gleichzeitig bzw. nebeneinander gefertigt worden sind) und/oder in vertikaler Richtung übereinander (in welchem Fall sie nacheinander gefertigt worden sind).

Das zumindest eine Bauteil ist aus verfestigtem Partikelmaterial (bzw. aus selektiv verfestigten Teilbereichen von aufeinanderfolgenden Partikelmaterial-Schichten) gebildet, und kann zum Beispiel eine Gussform oder ein Gießkern sein, zum Beispiel eine Sandgussform oder ein Sandgießkern.

Das Partikelmaterial (oder "Baumaterial") kann z.B. Sandpartikel enthalten. Zum Beispiel können für das Partikelmaterial Sandpartikel verwendet werden, welche aus der Gruppe ausgewählt sind, welche aus Quarzsandpartikeln, Aluminiumoxidsandpartikeln, Zirkonsandpartikeln, Olivinsandpartikeln, Silikatsandpartikeln, Chromitsanpartikeln und Kombinationen davon besteht. Das Partikelmaterial kann aber auch andere Bau-Partikel aufweisen, zum Beispiel Metalloder Kunststoffpartikel, so dass die Erfindung nicht auf die Verwendung von Sandpartikeln eingeschränkt ist. Das Partikelmaterial kann zum Beispiel Bau-Partikel mit einer durchschnittlichen Partikelgröße von 90 bis 250 □m haben, zum Beispiel einer durchschnittlichen Partikelgröße von 90 bis 200 □m, zum Beispiel einer durchschnittlichen Partikelgröße von 110 bis 180 □m. Neben den sog. Bau-Partikeln, aus denen das Bauteil primär aufgebaut ist/wird, kann das Partikelmaterial auch Zusatzstoffe aufweisen, zum Beispiel eine Komponente eines Mehrkomponentenbinders. Die Zusatzstoffe können in flüssiger und/oder fester Form vorliegen.

Nach seiner Fertigung gilt es das in die Partikelmaterial-Schüttung eingebettete Bauteil in einem sog. Entpackungsschritt ausreichend von dem nicht-verfestigten Partikelmaterial zu befreien. Mit anderen Worten wird das Bauteil in diesem Schritt ausreichend freigelegt. Nicht-verfestigtes Partikelmaterial bezeichnet dabei Partikel, die nicht mit anderen Partikeln unter Ausbildung des Bauteils verbunden sind, d.h. Partikel außerhalb des jeweiligen, selektiv verfestigten Teilbereichs einer Schicht.

Erfindungsgemäß erfolgt das eigentliche Entpacken nicht wie im Stand der Technik üblich innerhalb des Bauraums bzw. der Baubox, sondern die Partikelmaterial-Schüttung (bzw. der "Schichtstapel aus nicht-verfestigtem Partikelmaterial") wird zusammen mit dem Bauteil zunächst in einen Hilfsrahmen transferiert, der zu diesem Zweck vertikal über der Baubox angeordnet wird.

Die Baubox steht somit zügig für einen nächsten Baujob zur Verfügung. Zudem kann die Baubox, deren Bauplattform eingeschlossen, strukturell einfach ausgestaltet sein. Es ist also zum Beispiel nicht nötig, eine erhöhte Seitenwandstruktur und/oder eine gelochte Bauplattform mit Schließvorrichtung für die Baubox vorzusehen.

Im weiteren Verlauf kann das in den Hilfsrahmen transferierte Bauteil problemlos von der Partikelmaterial-Schüttung entpackt und von dem Hilfsrahmen entfernt werden. Das Verfahren eignet sich dabei auch für große Bauboxen und ermöglicht ein einfaches und zuverlässiges Entpacken. Das Entpacken kann vergleichsweise schnell und kostengünstig erfolgen.

Des Weiteren ist das beschriebene Vorgehen geeignet, um das Entpacken des Bauteils zumindest teilweise automatisiert ablaufen zu lassen.

Im Detail wird/werden bei dem Verfahren:
ein Hilfsrahmen, der eine nach unten hin offene, vertikale Umfangswandstruktur hat und eingerichtet ist, um die das Bauteil enthaltende Partikelmaterial-Schüttung aufzunehmen, vertikal über der vertikalen Umfangswandstruktur der Baubox angeordnet,
die Bauplattform nach oben gefahren, so dass die das Bauteil enthaltende Partikelmaterial-Schüttung von der Baubox an den Hilfsrahmen übergeben wird und in letzterem aufgenommen ist,
der Hilfsrahmen mit der darin aufgenommenen, das Bauteil enthaltenden Partikelmaterial-Schüttung und die Baubox voneinander weg bewegt, so dass letztere frei für einen nächsten Baujob ist, und
das Bauteil zumindest teilweise aus der Partikelmaterial-Schüttung entpackt und aus dem Hilfsrahmen entfernt.

Der Hilfsrahmen wird zum Beispiel mit seiner vertikalen Umfangswandstruktur im Wesentlichen in Verlängerung der vertikalen Umfangswandstruktur der Baubox angeordnet. Mit anderen Worten können die beiden vertikalen Umfangswandstrukturen im Wesentlichen miteinander fluchten.

Der Hilfsrahmen kann zum Beispiel unmittelbar auf der Baubox aufliegen oder zum Beispiel vertikal benachbart zu der Baubox über dieser angeordnet sein, zum Beispiel mit vertikalem Spiel, d.h. einem geringen vertikalen Abstand.

Zu der Zeit des Anordnens des Hilfsrahmen über der Baubox kann die Baubox zum Beispiel in der oben beschriebenen Baubox-Entpackungs-Position angeordnet bzw. in diese verfahren sein.

Das nach oben Fahren der Bauplattform kann zum Beispiel mit dem oben beschriebenen, integrierten Baubox-Hubantrieb oder einem "gemeinsamen" Hubantrieb erfolgen.

Die Bauplattform wird zum Beispiel im Wesentlichen bis zu dem oberen Rand ihrer vertikalen Umfangswandstruktur oder in dessen Nähe nach oben gefahren.

Um den Hilfsrahmen mit der darin aufgenommenen, das Bauteil enthaltenden Partikelmaterial-Schüttung und die Baubox voneinander weg zu bewegen, können zum Beispiel die Baubox und/oder der Hilfsrahmen bewegt werden, zum Beispiel (jeweils) seitlich bzw. horizontal (siehe unten). Auch wenn sich eine seitliche Bewegung in der Praxis bewährt hat, ist es grundsätzlich möglich, alternativ zum Beispiel eine vertikale Bewegung durchzuführen, zum Beispiel ein nach oben Bewegen des Hilfsrahmens (siehe unten).

In verschiedenen beispielgebenden Ausführungsformen kann das in dem Hilfsrahmen aufgenommene Bauteil zum Beispiel zumindest teilweise aus der Partikelmaterial-Schüttung entpackt werden, indem Partikelmaterial der Partikelmaterial-Schüttung durch die untere Öffnung des Hilfsrahmens hindurch aus dem Hilfsrahmen entfernt wird, zum Beispiel nach unten hin aus diesem herausrieselt. Das Bauteil kann dabei zum Beispiel zunächst noch zurückgehalten werden, oder alternativ zum Beispiel zusammen mit dem nicht-verfestigten Partikelmaterial durch die untere Öffnung aus dem Inneren des Hilfsrahmens entfernt werden. Grundsätzlich ist es aber auch möglich, das Partikelmaterial durch eine obere Öffnung des Hilfsrahmens abzuführen, zum Beispiel abzusaugen, auch wenn dies zeitintensiv sein kann. Wird das Partikelmaterial der Partikelmaterial-Schüttung durch die untere Öffnung des Hilfsrahmens hindurch aus dem Hilfsrahmen entfernt, zum Beispiel indem es nach unten hin aus diesem herausrieselt, kann die Partikelmaterialschüttung zum Beispiel bei Bedarf (zum Beispiel im Fall von schlecht rieselfähigem Partikelmaterial) zusätzlich von unten mit einem Fluidstrom (zum Beispiel Druckfluid, zum Beispiel Druckgas, zum Beispiel Druckluft) angeblasen werden, um das Partikelmaterial zumindest abschnittsweise aufzulockern (dabei kann zum Beispiel die gesamte Partikelmaterial-Schüttung in eine Wirbelschicht überführt werden). Hierzu können zum Beispiel an einer wie unten beschriebenen porösen, plattenförmigen Struktur und/oder Ablass-Struktur (zum Beispiel in Form eines Gitters oder Siebs) entsprechende Düsen zum Anblasen der Partikelmaterialschüttung von unten angebracht sein.

In verschiedenen beispielgebenden Ausführungsformen kann das Bauteil zum Beispiel aus dem Hilfsrahmen entfernt werden, indem der Hilfsrahmen und das Bauteil relativ zueinander bewegt werden.

In verschiedenen beispielgebenden Ausführungsformen können das Entpacken und das Entfernen gleichzeitig, überlappend oder nacheinander erfolgen.

Um das Bauteil zumindest teilweise aus der Partikelmaterial-Schüttung zu entpacken und aus dem Hilfsrahmen zu entfernen, kann in einer einfachen, beispielgebenden Ausgestaltung der Hilfsrahmen zum Beispiel seitlich über einen benachbart zu der Baubox angeordneten Tisch bewegt werden. Wird der Hilfsrahmen anschließend nach oben gezogen bzw. von der Partikelmaterial-Schüttung getrennt, so breitet sich die Partikelmaterial-Schüttung bzw. der "Schichtstapel aus nicht-verfestigtem Partikelmaterial" zur Seite hin aus, und das Bauteil kann der Partikelmaterial-Schüttung entnommen werden, gegebenenfalls nach einem weiteren Freilegen mittels zum Beispiel eines Besens.

Alternativ kann der Hilfsrahmen zum Beispiel in seitlicher Richtung vertikal über eine Rutsche bewegt werden, so dass das Bauteil und die Partikelmaterial-Schüttung gemeinsam durch die untere Öffnung des Hilfsrahmens hindurch entlang der Rutsche dem Hilfsrahmen entnommen werden können.

Analog kann in einer weiteren, einfachen, beispielgebenden Ausgestaltung der Hilfsrahmen zum Beispiel seitlich über eine benachbart zu der Baubox angeordnete, poröse Partikelmaterial-Ablass-Struktur (zum Beispiel in Form eines Gitters oder Siebs) bewegt werden, so dass das nicht-verfestigte Partikelmaterial der Partikelmaterial-Schüttung durch die Partikelmaterial-Ablass-Struktur hindurch nach unten hin abrieseln kann, wobei das Bauteil von der porösen Partikelmaterial-Ablass-Struktur zurückgehalten wird. Die poröse Partikelmaterial-Ablass-Struktur kann zum Beispiel an oder über einem Partikelmaterial-Auffangbehälter angebracht sein.

Gemäß verschiedenen Ausführungsformen kann der Hilfsrahmen zum Beispiel über eine plattenförmige Struktur relativbewegt werden bzw. über dieser angeordnet werden, oder eine plattenförmige Struktur kann zwischen der Bauplattform und der das Bauteil enthaltenden Partikelmaterial-Schüttung in der Baubox vorgesehen sein und zusammen mit der Partikelmaterial-Schüttung an den Hilfsrahmen übergeben werden (siehe auch unten). Die plattenförmige Struktur und der Hilfsrahmen können für ein Entpacken des Bauteils zum Beispiel voneinander wegbewegt werden, so dass die Partikelmaterial-Schüttung (optional zusammen mit dem Bauteil) durch die untere Öffnung des Hilfsrahmens hindurch ausgegeben werden kann, zum Beispiel auf eine poröse Partikelmaterial-Ablass-Struktur. Die jeweilige plattenförmige Struktur kann zum Beispiel porös ausgebildet sein, d.h. durchlässig für nicht-verfestigtes Partikelmaterial, was die Handhabung der Bauteile erleichtern kann. In diesem Fall kann zum Beispiel das Bauteil von der plattenförmigen Struktur zurückgehalten werden, während nicht-verfestigtes Partikelmaterial durch die plattenförmige Struktur hindurch nach unten rieselt.

Generell kann die poröse, plattenförmige Struktur dabei zum Beispiel von einem Sieb und/oder einem Gitter und/oder einer Lochplatte gebildet sein.

Die poröse, plattenförmige Struktur kann zum Beispiel aus Metall hergestellt sein.

Die poröse, plattenförmige Struktur kann eingerichtet sein, um nicht-verfestigtes Partikelmaterial nach unten durchrieseln zu lassen, um dadurch das Bauteil zumindest teilweise zu entpacken. Die poröse, plattenförmige Struktur kann ferner eingerichtet sein, um das Bauteil zurückzuhalten.

Das zumindest teilweise Entpacken kann also durch die poröse, plattenförmige Struktur hindurch erfolgen.

Gemäß verschiedenen Ausführungsformen kann zum Beispiel zwischen der Bauplattform und der das Bauteil enthaltenden Partikelmaterial-Schüttung eine plattenförmige Struktur, welche zum Beispiel porös ausgebildet sein kann (d.h., durchlässig für nicht-verfestigtes Partikelmaterial), in der Baubox angeordnet sein, wobei die plattenförmige Struktur zusammen mit der darauf angeordneten, das Bauteil enthaltenden Partikelmaterial-Schüttung von der Baubox an den Hilfsrahmen übergeben wird und zusammen mit der Partikelmaterial-Schüttung und dem Hilfsrahmen von der Baubox weg relativbewegt wird, zum Beispiel in eine Position vertikal über einer Partikelmaterial-Auffangvorrichtung.

Zum Beispiel können der Hilfsrahmen, die Partikelmaterial-Schüttung und die plattenförmige Struktur seitlich bzw. horizontal in die Position vertikal über der Partikelmaterial-Auffangvorrichtung bewegt werden.

Die in der Baubox aufgenommene plattenförmige Struktur kann zum Beispiel im Wesentlichen die gleiche Größe haben wie die Bauplattform.

Die plattenförmige Struktur kann zum Beispiel nach ihrer Übergabe an den Hilfsrahmen an diesem befestigt werden, zum Beispiel mittels einer Verriegelung/Arretierungs-Struktur, zum Beispiel aufweisend einen oder mehrere linear verfahrbare Bolzen, die in eine jeweilige Ausnehmung der plattenförmigen Struktur eingreifen. In diesem Fall kann der Hilfsrahmen zum Beispiel auch vertikal von der Baubox weg bewegt werden, oder zum Beispiel nach einem seitlichen Weg-Bewegen frei bewegt werden, d.h. ohne das Erfordernis, die plattenförmige Struktur von unten abzustützen.

Es ist allerdings nicht erforderlich, Hilfsrahmen und plattenförmige Struktur aneinander zu befestigen bzw. miteinander zu verriegeln, und die plattenförmige Struktur kann zum Beispiel während eines relativen Weg-Bewegens des Hilfsrahmens von unten abgestützt werden, zum Beispiel an einem geeigneten Gestell oder an einer porösen Partikelmaterial-Ablass-Struktur (zum Beispiel in Form eines Gitters oder Siebs).

Gemäß verschiedenen Ausführungsformen können der Hilfsrahmen mit der darin aufgenommenen, das Bauteil enthaltenden Partikelmaterial-Schüttung und die Baubox seitlich voneinander weg bewegt werden, zum Beispiel durch seitliches Bewegen des Hilfsrahmens mit der darin aufgenommenen, das Bauteil enthaltenden Partikelmaterial-Schüttung, zum Beispiel entlang einer Führungsstruktur.

Bei dem seitlichen voneinander weg Bewegen kann die Partikelmaterial-Schüttung dabei zum Beispiel auf einer horizontalen Stützstruktur angeordnet werden, zum Beispiel auf eine solche geschoben werden. Die horizontale Stützstruktur kann zum Beispiel gebildet sein von einem Gitterrost und/oder einer plattenförmigen Struktur, welche zum Beispiel porös ist.

Gemäß verschiedenen Ausführungsformen kann der Hilfsrahmen mit der darin aufgenommenen, das Bauteil enthaltenden Partikelmaterial-Schüttung vertikal über einer ("externen") plattenförmigen Struktur, welche zum Beispiel porös ausgebildet sein kann (d.h., durchlässig für nicht-verfestigtes Partikelmaterial), angeordnet werden, bzw. über diese relativbewegt werden. Die "externe" plattenförmige Struktur kann zum Beispiel seitlich neben der Baubox im Wesentlich in Höhe von deren oberem Randbereich angeordnet werden/sein. Der Hilfsrahmen kann in diesem Fall nach Übergabe der Partikelmaterial-Schüttung zum Beispiel seitlich relativbewegt werden (zum Beispiel selbst bewegt werden) in eine Position vertikal über (zum Beispiel unmittelbar auf) der plattenförmigen Struktur. Die plattenförmige Struktur kann dabei zum Beispiel größer als die Bauplattform ausgebildet sein, zum Beispiel auch größer als die Baubox.

Gemäß verschiedenen Ausführungsformen kann die plattenförmige Struktur über einer Partikelmaterial-Auffangvorrichtung angeordnet sein, oder der Hilfsrahmen kann mit der darin aufgenommenen, das Bauteil enthaltenden Partikelmaterial-Schüttung zunächst über die plattenförmige Struktur und anschließend mit der plattenförmigen Struktur über die Partikelmaterial-Auffangvorrichtung bewegt werden.

Die Partikelmaterial-Auffangvorrichtung kann zum Beispiel aufweisen einen Partikelmaterial-Auffangbehälter und/oder eine poröse Partikelmaterial-Ablass-Struktur.

Gemäß verschiedenen Ausführungsformen können die Durchgangsöffnungen der porösen, plattenförmigen Struktur während einer seitlichen Relativbewegung zwischen dem Hilfsrahmen und der porösen, plattenförmigen Struktur (um den Hilfsrahmen in eine Position vertikal über der porösen, plattenförmigen Struktur zu bringen) mit Partikelmaterial gefüllt werden/sein und/oder verdeckt werden (zum Beispiel zumindest zeitweise), um ein Ablassen von Partikelmaterial aus dem Hilfsrahmen zu reduzieren. Hierdurch kann vermieden werden, dass das Bauteil an der porösen, plattenförmigen Struktur reibt und in der Folge beschädigt wird. Mit anderen Worten kann vermieden werden, dass das Bauteil infolge eines Ablassens von Partikelmaterial absinkt und mit der porösen, plattenförmigen Struktur in Kontakt kommt, bevor der Hilfsrahmen vollständig über der porösen, plattenförmigen Struktur angeordnet ist. Das Verdecken der Öffnungen kann zum Beispiel mittels einer Plattenstruktur erfolgen, zum Beispiel einer Schieberplatte, welche zum Beispiel oberhalb oder unterhalb der porösen, plattenförmigen Struktur angeordnet sein kann.

Gemäß verschiedenen Ausführungsformen kann die das Bauteil enthaltende Partikelmaterial-Schüttung beim zumindest teilweisen Entpacken des Bauteils aus der Partikelmaterial-Schüttung auf einer porösen, plattenförmigen Struktur, zum Beispiel auf einer wie oben beschriebenen, porösen, plattenförmigen Struktur, angeordnet sein. Zudem/In diesem Zustand kann die das Bauteil enthaltende Partikelmaterial-Schüttung zum Beispiel umfangsseitig von dem Hilfsrahmen umgeben sein. Die poröse, plattenförmige Struktur kann zum Beispiel wiederum über einer Partikelmaterial-Auffangvorrichtung angeordnet sein. Die Partikelmaterial-Auffangvorrichtung kann zum Beispiel neben der Baubox angeordnet sein.

Gemäß verschiedenen Ausführungsformen kann das zumindest teilweise entpackte Bauteil zusammen mit der porösen, plattenförmigen Struktur und dem Hilfsrahmen zu einer Bauteil-Übergabestation bewegt werden, wo das Bauteil und die poröse, plattenförmige Struktur von dem Hilfsrahmen getrennt werden und von wo aus das Bauteil zum Beispiel einem Bauteil-Vorrat zugeführt wird, zum Beispiel gemeinsam mit der porösen, plattenförmigen Struktur. Die Bauteil-Übergabestation kann zum Beispiel neben der Partikelmaterial-Auffangvorrichtung angeordnet sein. Die Bauteil-Übergabestation kann zum Beispiel eine höhenverstellbare Ablagestruktur zum Ablegen der porösen, plattenförmigen Struktur aufweisen. Diese kann zum Beispiel nach unten verfahren werden, um die poröse, plattenförmige Struktur zusammen mit dem darauf angeordneten Bauteil von dem Hilfsrahmen zu trennen/entfernen. Der optionale Bauteil-Vorrat kann zum Beispiel neben der Bauteil-Übergabestation angeordnet sein. Der Bauteil-Vorrat kann zum Beispiel ein Regal sein, in dem mehrere Bauteile aufnehmbar sind.

Gemäß verschiedenen Ausführungsformen kann die Baubox zu Beginn des Verfahrens in einer Baubox-Entpackungs-Position neben einer Partikelmaterial-Auffangvorrichtung angeordnet sein/werden, wobei der Hilfsrahmen von der Baubox-Entpackungs-Position zu der Partikelmaterial-Auffangvorrichtung, optional über die Partikelmaterial-Auffangvorrichtung weiter zu der oben erwähnten Übergabestation, entlang einer Führungsstruktur verfahrbar ist / verfahren wird. Die Führungsstruktur kann zum Beispiel eine horizontale Führungsstruktur sein. Die Führungsstruktur kann zum Beispiel eine lineare Führungsstruktur sein.

Gemäß verschiedenen Ausführungsformen der Erfindung kann/können:
die vertikale Umfangswandstruktur des Hilfsrahmens zusätzlich nach oben hin offen sein (in diesem Fall kann zum Beispiel durch die obere Öffnung hindurch ein Fluidstrom auf die Partikelmaterial-Schüttung und/oder das Bauteil gerichtet werden) und/oder
die vertikale Umfangswandstruktur des Hilfsrahmens eine Höhe haben, die größer oder gleich der Höhe der vertikalen Umfangswandstruktur der Baubox ist, und/oder
ein von der vertikalen Umfangswandstruktur des Hilfsrahmens begrenzter Raum und ein von der vertikalen Umfangswandstruktur der Baubox begrenzter Raum im horizontalen Schnitt die gleiche Form und/oder die gleiche Größe haben und/oder
der Hilfsrahmen mit einer Reinigungsvorrichtung ausgestattet sein, die eingerichtet ist, um die nach oben gefahrene Bauplattform zu reinigen, während der Hilfsrahmen mit der darin aufgenommenen, das Bauteil enthaltenden Partikelmaterial-Schüttung relativ zu der Baubox seitlich bewegt wird. Die Reinigungsvorrichtung kann zum Beispiel an einer Außenseite der vertikalen Umfangswandstruktur angebracht sein. Die Reinigungsvorrichtung kann zum Beispiel ein Abstreifelement aufweisen, zum Beispiel eine Bürste.

Gemäß verschiedenen Ausführungsformen der Erfindung kann das Anordnen des Hilfsrahmens über der vertikalen Umfangswandstruktur der Baubox und/oder das nach oben Fahren der Bauplattform und/oder das voneinander Weg-Bewegen von Hilfsrahmen und Baubox und/oder das zumindest teilweise Entpacken des Bauteils und/oder das voneinander Entfernen von Bauteil und Hilfsrahmen und/oder ein anfängliches Anordnen der Baubox in einer Baubox-Entpackungs-Position neben einer Partikelmaterial-Auffangvorrichtung und/oder ein Bewegen des entpackten Bauteils zusammen mit der porösen, plattenförmigen Struktur und dem Hilfsrahmen zu einer Bauteil-Übergabestation und/oder ein Trennen des Bauteils und der porösen, plattenförmigen Struktur von dem Hilfsrahmen und/oder ein Zuführen des entpackten Bauteils an einen Bauteil-Vorrat automatisiert ablaufen.

Gemäß verschiedenen Ausführungsformen der Erfindung kann ein Verfahren zum Herstellen eines oder mehrerer Bauteile mittels eines generativen Fertigungsverfahrens in Kombination mit einem wie oben beschriebenen Verfahren zum Entpacken der derart hergestellten Bauteile bereitgestellt sein.

Bei dem generativen Fertigungsverfahren werden dabei in dem von der Baubox gebildeten Bauraum sämtliche Bauteile in der Draufsicht nebeneinander, z.B. in einer einzigen horizontalen Bauteil-Lage, hergestellt.

Alternativ oder zusätzlich weist das Bauteil bzw. eines oder mehrere oder alle der Bauteile eine jeweilige Stütz- oder Haltestruktur auf, die bei dem generativen Fertigungsverfahren zusammen mit dem jeweiligen Bauteil mitausgebildet wird, wodurch beim Entpacken der Bauteile, zum Beispiel wenn das nicht-verfestigte Partikelmaterial nach unten hin aus dem Hilfsrahmen abgelassen wird, eine Beschädigung des jeweiligen Bauteils und/oder ein Zulegen einer oder mehrerer Öffnungen (von zum Beispiel der porösen, plattenförmigen Struktur) durch das Bauteil verhindert wird. Dabei können bei dem generativen Fertigungsverfahren zum Beispiel ein oder mehrere Halterahmen mitausgebildet werden, an denen jeweils ein oder mehrere Bauteile über ihre jeweilige Stütz- oder Haltestruktur gehalten sind, und/oder mehrere Bauteile können über ihre jeweilige Stütz- oder Haltestruktur miteinander verbunden sein, und/oder das Bauteil bzw. eines oder mehrere oder alle der Bauteile können über ihre jeweilige Stütz- oder Haltestruktur mit der in der Baubox aufgenommenen (zum Beispiel porösen) plattenförmigen Struktur verbunden sein.

Gemäß verschiedenen Ausführungsformen der Erfindung kann ein Verfahren zum Herstellen eines oder mehrerer Bauteile mittels eines generativen Fertigungsverfahrens bereitgestellt sein, in Kombination mit einem wie oben beschriebenen Verfahren zum Entpacken der derart hergestellten Bauteile.

Bei dem Verfahren werden die ein oder mehreren Bauteile in einem Bauraum gefertigt, der umfangsseitig von einer nach oben hin offenen, vertikalen Umfangswandstruktur einer mobilen Baubox begrenzt ist, wobei in der Baubox eine höhenverstellbare Bauplattform aufgenommen ist, die im Verlauf des Fertigungsverfahrens nach unten abgesenkt wird, um mit dem Fertigungsverfahren über der Bauplattform eine das Bauteil enthaltende Partikelmaterial-Schüttung aufzubauen.

Vor dem Bauprozess wird dabei auf der Bauplattform der mobilen Baubox eine (zum Beispiel poröse) plattenförmige Struktur angeordnet (diese kann wie oben beschrieben ausgebildet sein), die zum Entpacken der ein oder mehreren Bauteile nach deren Fertigung durch ein nach oben Fahren der Bauplattform zusammen mit der das Bauteil enthaltenden Partikelmaterial-Schüttung aus der Baubox entnehmbar und in einen Hilfsrahmen überführbar ist.

Die Baubox kann zum Beispiel während des Bauprozesses in einem 3D-Drucker angeordnet sein und zum Entpacken aus diesem heraus in eine Baubox-Entpackungs-Position verfahren werden. Die plattenförmige Struktur kann vor dem Bauprozess zum Beispiel lose auf die Bauplattform gelegt werden. In dem Fall einer porösen, plattenförmigen Struktur können zu Beginn des Bauprozesses die Löcher der porösen, plattenförmigen Struktur gefüllt und optional eine oder mehrere "Opfer"-Schichten auf der porösen, plattenförmigen Struktur abgelegt werden. Die Bauplattform selbst kann frei von Durchgangslöchern sein. Die Bauplattform ist zum Beispiel eingerichtet, um im Wesentlichen bis zu dem oberen Rand der vertikalen Umfangswandstruktur verfahren zu werden, so dass die plattenförmige Struktur zum Entpacken der ein oder mehreren Bauteile nach deren Fertigung durch ein nach oben Fahren der Bauplattform zusammen mit der das Bauteil enthaltenden Partikelmaterial-Schüttung aus der Baubox entnommen und in den Hilfsrahmen überführt werden kann.

Gemäß verschiedenen Ausführungsformen der Erfindung ist eine Vorrichtung bereitgestellt zum Entpacken eines mittels eines generativen Fertigungsverfahrens hergestellten Bauteils aus einer Partikelmaterial-Schüttung aus nicht-verfestigtem Partikelmaterial, welche gemeinsam mit dem Bauteil in einem Aufnahmeraum angeordnet ist, der umfangsseitig von einer nach oben hin offenen, vertikalen Umfangswandstruktur einer mobilen Baubox begrenzt wird, in der eine höhenverstellbare Bauplattform aufgenommen ist, auf der die das Bauteil enthaltende Partikelmaterial-Schüttung angeordnet ist, und die in eine Baubox-Entpackungs-Position verfahrbar ist, wobei die Vorrichtung aufweist:
einen Hilfsrahmen, der eine nach unten hin offene, vertikale Umfangswandstruktur hat und der entlang einer Führungsstruktur von einer ersten Position, in der er vertikal über der vertikalen Umfangswandstruktur einer in ihre Baubox-Entpackungs-Position gefahrenen mobilen Baubox angeordnet ist, zu einer zweiten Position verfahrbar ist, und
eine Partikelmaterial-Auffangvorrichtung, die vertikal unterhalb des Hilfsrahmens angeordnet ist, wenn dieser sich in der zweiten Position befindet.

Die erste Position und die zweite Position können zum Beispiel horizontal benachbart zueinander angeordnet sein. Die Führungsstruktur kann zum Beispiel eine horizontale Führungsstruktur sein. Die Führungsstruktur kann zum Beispiel eine lineare Führungsstruktur sein.

Die Partikelmaterial-Auffangvorrichtung kann zum Beispiel eine solche Höhe haben, dass ihr oberer Randbereich im Wesentlichen auf einer Höhe mit einem oberen Randbereich der Baubox in deren Baubox-Entpackungs-Position oder etwas darunter angeordnet ist.

Die Partikelmaterial-Auffangvorrichtung kann zum Beispiel eine poröse Partikelmaterial-Ablass-Struktur (zum Beispiel in Form eines Gitters oder Siebs), die zum Beispiel als Stützstruktur für die poröse, plattenförmige Struktur dienen kann, und/oder einen Partikelmaterial-Auffangbehälter aufweisen.

Oberhalb des Hilfsrahmens in dessen zweiter Position kann zum Beispiel eine Blasvorrichtung vorgesehen sein, die eingerichtet ist, um durch eine obere Öffnung des Hilfsrahmens hindurch einen Fluidstrahl (zum Beispiel Luftstrahl) auf das Bauteil zu richten.

Die Vorrichtung kann zum Beispiel ferner die Baubox aufweisen.

Gemäß verschiedenen Ausführungsformen kann die Vorrichtung ferner aufweisen:
eine Bauteil-Übergabestation, wobei der Hilfsrahmen entlang der Führungsstruktur von der ersten Position über die zweite Position zu der dritten Position verfahrbar ist, und wobei der Hilfsrahmen in der dritten Position vertikal über der Bauteil-Übergabestation angeordnet ist, und/oder
eine Steuerung, die eingerichtet ist, um einen oder mehrere oder alle Schritte des obigen Verfahrens automatisiert durchzuführen.

Die zweite Position und die dritte Position können zum Beispiel horizontal benachbart zueinander angeordnet sein.

Die Bauteil-Übergabestation kann wie oben beschrieben ausgebildet sein, d.h. zum Beispiel eine höhenverstellbare Ablagestruktur zum Ablegen der plattenförmigen Struktur aufweisen, die im Wesentlichen (mindestens) bis zu der Höhe von dem oberen Randbereich der Partikelmaterial-Auffangvorrichtung verfahrbar ist.

Die Vorrichtung kann zum Beispiel ferner den oben beschriebenen Bauteil-Vorrat aufweisen.

Die Vorrichtung kann zum Beispiel ferner einen Vorrat von plattenförmigen Strukturen aufweisen, so dass der Hilfsrahmen eine entleerte Baubox für einen nächsten Baujob mit einer neuen plattenförmigen Struktur bestücken kann.

Weitere Merkmale und Vorteile der vorliegenden Erfindung sind ersichtlich aus oder im Detail dargelegt in der angehängten Zeichnung, welche hierin mitaufgenommen ist, sowie der folgenden detaillierten Beschreibung, welche zusammen dazu dienen, bestimmte Prinzipien der vorliegenden Erfindung zu erläutern.

Die Erfindung wird im Folgenden anhand verschiedener Ausführungsformen mit Bezugnahme auf die Zeichnung näher erläutert. In der Zeichnung zeigen:
Die Figuren 1a und 1 b eine Vorrichtung zum Entpacken eines mittels eines generativen Fertigungsverfahrens hergestellten Bauteils aus einer Partikelmaterial-Schüttung aus nicht-verfestigtem Partikelmaterial gemäß einer ersten Ausführungsform der Erfindung.
Die Figuren 2a bis 5b ein Verfahren zum Entpacken eines mittels eines generativen Fertigungsverfahrens hergestellten Bauteils aus einer Partikelmaterial-Schüttung aus nicht-verfestigtem Partikelmaterial gemäß einer ersten Ausführungsform der Erfindung, welches die Vorrichtung aus den Figuren 1 a und 1 b verwendet.
Die Figuren 6 bis 13 eine Vorrichtung und ein Verfahren zum Entpacken eines mittels eines generativen Fertigungsverfahrens hergestellten Bauteils aus einer Partikelmaterial-Schüttung aus nicht-verfestigtem Partikelmaterial gemäß einer zweiten Ausführungsform der Erfindung.
Die Figuren 14 bis 21 eine Vorrichtung und ein Verfahren zum Entpacken eines mittels eines generativen Fertigungsverfahrens hergestellten Bauteils aus einer Partikelmaterial-Schüttung aus nicht-verfestigtem Partikelmaterial gemäß einer dritten Ausführungsform der Erfindung.
Die Figuren 22 bis 28 eine Vorrichtung und ein Verfahren zum Entpacken eines mittels eines generativen Fertigungsverfahrens hergestellten Bauteils aus einer Partikelmaterial-Schüttung aus nicht-verfestigtem Partikelmaterial gemäß einer vierten Ausführungsform der Erfindung.

In der Zeichnung werden für ähnliche oder äquivalente Teile gleiche Bezugszeichen verwendet.

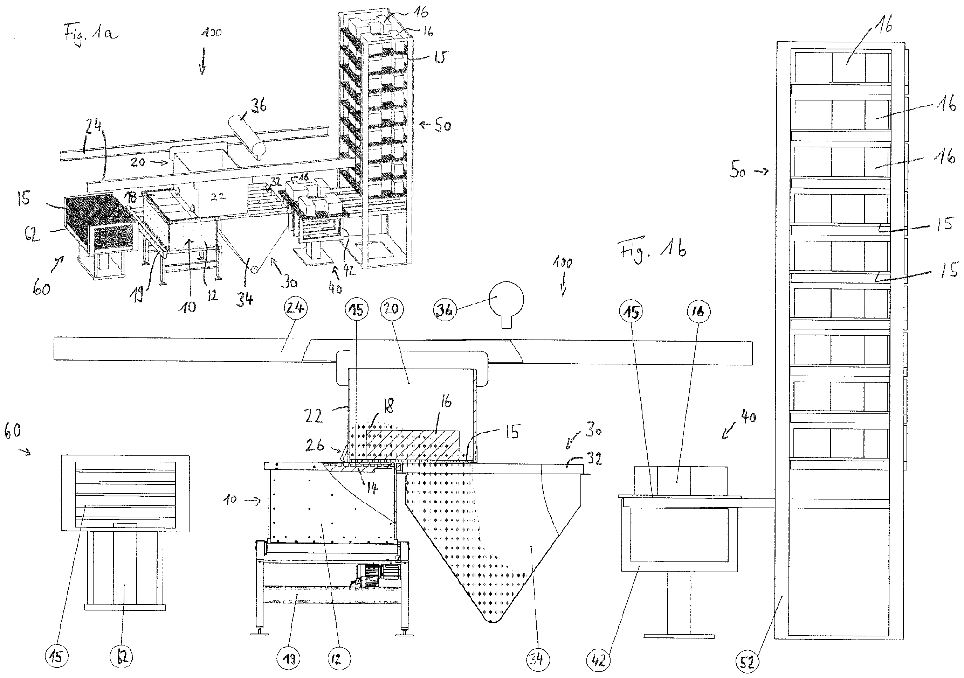

Die **Figuren 1a und 1b** zeigen eine Vorrichtung 100 zum Entpacken eines mittels eines generativen Fertigungsverfahrens hergestellten Bauteils aus einer Partikelmaterial-Schüttung aus nicht-verfestigtem Partikelmaterial (im Folgenden auch "Entpackvorrichtung"), welche gemeinsam mit dem Bauteil in einem Aufnahmeraum angeordnet ist, der umfangsseitig von einer nach oben hin offenen, vertikalen Umfangswandstruktur einer mobilen Baubox begrenzt wird/ist, in der eine höhenverstellbare Bauplattform aufgenommen ist, auf der die das Bauteil enthaltende Partikelmaterial-Schüttung angeordnet ist, und die in eine Baubox-Entpackungs-Position verfahrbar ist. Wie aus den Figuren 1 a und 1 b ersichtlich, ist die Baubox-Entpackungs-Position außerhalb eines 3D-Druckers (nicht gezeigt) angeordnet, in dem das Bauteil in einem von der Baubox gebildeten Bauraum gefertigt wurde, zum Beispiel mittels selektiven Aufdruckens von Bindemittel oder selektiven Lasersinterns.

Wie aus den Figuren 1 a und 1 b ersichtlich, weist die Vorrichtung 100 auf: die Baubox 10, einen Hilfsrahmen 20, eine Partikelmaterial-Auffangvorrichtung 30, eine optionale Bauteil-Übergabestation 40, einen optionalen Bauteil-Vorrat 50 und einen optionalen Vorrat 60 von porösen, plattenförmigen Strukturen 15. Die genannten Komponenten werden im Folgenden im Detail beschrieben.

Die Baubox 10 hat eine nach oben hin offene, vertikale Umfangswandstruktur 12. Wie gezeigt, kann die vertikale Umfangswandstruktur 12 zum Beispiel in der Draufsicht rechteckig ausgebildet sein.

Die Baubox 10 ist hier beispielgebend als mobile Baubox 10 ausgebildet, die zumindest zwischen einer Baubox-Bauposition, in der die Baubox in dem 3D-Drucker (nicht gezeigt) angeordnet ist, um das Bauteil in einem von der Baubox gebildeten Bauraum zu fertigen, und der Baubox-Entpackungs-Position hin-und-her-verfahrbar ist. In Figur 1a ist dabei ein optionales Fördersystem (hier beispielgebend in Form einer Rollenbahn 19) angedeutet, auf/mit welchem die Baubox 10 in ihre Baubox-Entpackungs-Position verfahrbar ist. In ihrer Baubox-Entpackungs-Position kann die Baubox 10 zum Beispiel fixiert und/oder in einer vorbestimmten Position ausgerichtet werden. Es sollte verständlich sein, dass die Erfindung jedoch nicht auf eine mobile Baubox beschränkt ist, auch wenn sie für eine solche gut geeignet ist.

Im Innern der Baubox 10 ist eine höhenverstellbare Bauplattform 14 aufgenommen, auf der in dem Fertigungsprozess das Bauteil bzw. der Schichtstapel enthaltend das Bauteil aufgebaut wird. Zu Beginn des Fertigungsprozess kann die Bauplattform 14 nach oben gefahren werden. Während des Fertigungsprozess kann die Bauplattform 14 schrittweise um eine Schichtdicke abgesenkt werden. Am Ende des Fertigungsprozess ist die Bauplattform 14 um einen vorbestimmten Betrag nach unten gefahren, und über der Bauplattform ist eine Partikelmaterial-Schüttung 18 angeordnet, die das mindestens eine Bauteil 16 enthält. Die Bauplattform 14 kann in dem Fertigungsprozess und dem Entpackprozess entweder über einen eigenen, in die Baubox 10 integrierten Hubantrieb angetrieben werden, oder alternativ mittels eines stationären Hubantriebs angetrieben werden, der in dem 3D-Drucker bzw. der Entpackvorrichtung ortsfest installiert ist.

Der Hilfsrahmen 20 hat eine nach unten hin offene, vertikale Umfangswandstruktur 22. Zum Beispiel kann die vertikale Umfangswandstruktur 22 zudem nach oben hin offen sein. Der Hilfsrahmen 20 ist hier beispielgebend entlang einer Führungsstruktur 24 verfahrbar. Die Führungsstruktur kann wie gezeigt zum Beispiel als horizontale Führungsstruktur ausgebildet sein (zum Beispiel als horizontale Linear-Führungsstruktur), entlang der der Hilfsrahmen horizontal verfahrbar ist. Der Hilfsrahmen 20 ist entlang der Führungsstruktur 24 zumindest zwischen einer ersten Position und einer zweiten Position verfahrbar, optional zusätzlich in eine dritte Position, in der er vertikal über der optionalen Bauteil-Übergabestation 40 angeordnet ist, und/oder eine vierte Position, in der er vertikal über dem optionalen Vorrat 60 angeordnet ist. In der ersten Position ist der Hilfsrahmen 20 vertikal über der vertikalen Umfangswandstruktur 12 der Baubox 10 angeordnet (wenn diese sich in ihrer Baubox-Entpackungs-Position befindet), und in der zweiten Position ist der Hilfsrahmen 20 vertikal über der Partikelmaterial-Auffangvorrichtung 30 angeordnet, die unten beschrieben wird. In den Figuren 1 a und 1 b befindet sich der Hilfsrahmen 20 dabei zwischen der ersten und der zweiten Position.

Der Hilfsrahmen 20 kann zudem eine optionale Reinigungsvorrichtung 26 aufweisen, mit der die nach oben gefahrene Plattform 14 gereinigt (zum Beispiel abgestreift) werden kann, während der Hilfsrahmen 20 von der ersten in die zweite Position bewegt wird; siehe Figur 1 b.

Die Partikelmaterial-Auffangvorrichtung 30 ist vertikal unterhalb des Hilfsrahmens 20 angeordnet, wenn dieser sich in der zweiten Position befindet. Die Partikelmaterial-Auffangvorrichtung 30 kann zum Beispiel neben der Baubox 10 angeordnet sein, wenn diese sich in ihrer Baubox-Entpackungs-Position befindet. Wie in Figur 1 b gezeigt, kann die Partikelmaterial-Auffangvorrichtung 30 zum Beispiel eine solche Höhe haben, dass ihr oberer Randbereich (zum Beispiel gebildet durch die unten beschriebene poröse Partikelmaterial-Ablass-Struktur 32) im Wesentlichen auf einer Höhe mit einem oberen Randbereich der Baubox 10 in deren Baubox-Entpackungs-Position angeordnet ist.

Die Partikelmaterial-Auffangvorrichtung 30 kann zum Beispiel einen Partikelmaterial-Auffangbehälter 34 aufweisen, zum Beispiel in der Form einer im Querschnitt trichterförmigen Wanne. Die Partikelmaterial-Auffangvorrichtung 30 kann zum Beispiel ferner eine poröse Partikelmaterial-Ablass-Struktur 32 aufweisen, zum Beispiel in Form eines Gitters oder Siebs. Die poröse Partikelmaterial-Ablass-Struktur 32 kann zum Beispiel beim Entpacken als Abstützung für das Bauteil und/oder die poröse, plattenförmige Struktur 15 dienen. Die poröse Partikelmaterial-Ablass-Struktur 32 kann zum Beispiel an oder über dem Partikelmaterial-Auffangbehälter 34 angebracht sein.

Vertikal über der Partikelmaterial-Auffangvorrichtung 30 (und vertikal über dem Hilfsrahmen 20 in dessen zweiter Position) kann eine optionale Blasvorrichtung 36 vorgesehen sein, die eingerichtet ist, um durch die obere Öffnung des Hilfsrahmens 20 hindurch einen Fluidstrahl (zum Beispiel Luftstrahl) auf das Bauteil 16 zu richten. Die Blasvorrichtung 36 kann zum Beispiel ein oder mehrere Blasdüsen aufweisen, die zum Beispiel einen vertikalen Luftvorhang erzeugen, der Partikelmaterial von dem Bauteil abbläst, während dieses zusammen mit dem Hilfsrahmen an der Blasvorrichtung vorbei bewegt wird.

Die optionale Bauteil-Übergabestation 40 ist vertikal unterhalb des Hilfsrahmens 20 angeordnet, wenn dieser sich in der dritten Position befindet. Die Bauteil-Übergabestation 40 kann zum Beispiel neben der Partikelmaterial-Auffangvorrichtung 30 angeordnet sein.

Wie in Figur 1 b gezeigt, kann die Bauteil-Übergabestation 40 zum Beispiel eine Ablagestruktur/Abstützstruktur 42 zum Ablegen/Abstützen des Bauteils 16 und/oder der porösen, plattenförmigen Struktur 15 aufweisen. Die Abstützstruktur 42 kann zum Beispiel höhenverstellbar sein und zum Beispiel eingerichtet sein, um mindestens bis zu der Höhe von dem oberen Randbereich der Partikelmaterial-Auffangvorrichtung 30 verfahrbar zu sein. Durch ein Absenken der Abstützstruktur 42 ist es möglich, das Bauteil und/oder die poröse, plattenförmige Struktur 15 von dem Hilfsrahmen zu trennen. Der Hilfsrahmen ist somit frei für eine nächste Baubox. In Figur 1 b ist die Abstützstruktur in einer abgesenkten Position gezeigt.

Der optionale Bauteil-Vorrat 50 kann zum Beispiel neben der Bauteil-Übergabestation 40 angeordnet sein. Zum Beispiel kann der Bauteil-Vorrat 50 ein Bauteil-Speicher-Regal 52 aufweisen, in dem eine Mehrzahl von Bauteilen 16 aufbewahrt werden kann, zum Beispiel zusammen mit einer jeweiligen porösen, plattenförmigen Struktur 15. Der Bauteil-Vorrat 50 und die Bauteil-Übergabestation 40 können zum Beispiel derart eingerichtet sein, dass ein von dem Hilfsrahmen 20 an die Bauteil-Übergabestation 40 übergebenes Bauteil 16 automatisiert an einem freiem Platz in dem Regal 52 untergebracht wird.

Der optionale Vorrat 60 von porösen, plattenförmigen Strukturen 15 kann zum Beispiel neben der Baubox 10 angeordnet sein, wenn diese sich in ihrer Baubox-Entpackungs-Position befindet. Der Vorrat 60 hat eine Haltestruktur 62, die eine Mehrzahl von porösen, plattenförmigen Strukturen 15 hält, so dass der Hilfsrahmen 20 eine entleerte Baubox 10 für einen nächsten Baujob mit einer neuen porösen, plattenförmigen Struktur 15 bestücken kann. Hierzu kann der Hilfsrahmen in seine vierte Position oberhalb des Vorrats 60 verfahren werden, eine poröse, plattenförmige Struktur 15 greifen, wieder in die erste Position verfahren werden, und die poröse, plattenförmige Struktur 15 an die Baubox 10 übergeben. Zum Greifen der porösen, plattenförmigen Struktur 15 in der vierten Position kann der Hilfsrahmen 20 zum Beispiel mit einer Verriegelungsvorrichtung versehen sein, zum Beispiel aufweisend einen oder mehrere linear verfahrbare Bolzen, die selektiv in eine jeweilige Ausnehmung der plattenförmigen Struktur eingreifen. Die Verriegelungsvorrichtung kann auch während des Entpackens genutzt werden, um die plattenförmige Struktur an dem Hilfsrahmen zu fixieren, nachdem diese von der Baubox an den Hilfsrahmen übergeben wurde.

Hierbei ist anzumerken, dass gemäß der vorliegenden Ausführungsform vor dem Bauprozess auf der Bauplattform 14 der Baubox 10 eine poröse, plattenförmige Struktur 15 angeordnet wird, die später zum Entpacken der ein oder mehreren Bauteile 16 nach deren Fertigung durch ein nach oben Fahren der Bauplattform zusammen mit der das Bauteil 16 enthaltenden Partikelmaterial-Schüttung 18 aus der Baubox entnommen und in den Hilfsrahmen 20 überführt wird. Dies ist in Figur 1 b angedeutet und wird weiter unten im Detail beschrieben.

Die poröse, plattenförmige Struktur 15 kann zum Beispiel von einer Lochplatte gebildet sein. Die poröse, plattenförmige Struktur 15 kann zum Beispiel aus Metall hergestellt sein.

Die Entpackvorrichtung 100 kann ferner eine (nicht gezeigte) Steuerung aufweisen, die eingerichtet ist, um eine oder mehrere oder alle der folgenden Prozesse zu steuern:
ein Verfahren der Baubox 10 in die Baubox-Entpackungs-Position, zum Beispiel ausgehend von der Baubox-Bauposition,
ein Verfahren des Hilfsrahmens 20 entlang dessen Führungsstruktur 24,
ein Anheben der Bauplattform 14, wenn sich die Baubox in ihrer Entpackungs-Position befindet und der Hilfsrahmen in seiner ersten Position angeordnet ist,
ein Anheben und Absenken der Ablagestruktur 42 der Übergabestation 40,
ein Einlagern des Bauteils 16 von der Übergabestation 40 in den Vorrat 50,
ein Abblasen des Bauteils mittels der Blasvorrichtung 36,
ein Verriegeln einer porösen, plattenförmigen Struktur 15 an dem Hilfsrahmen 20.

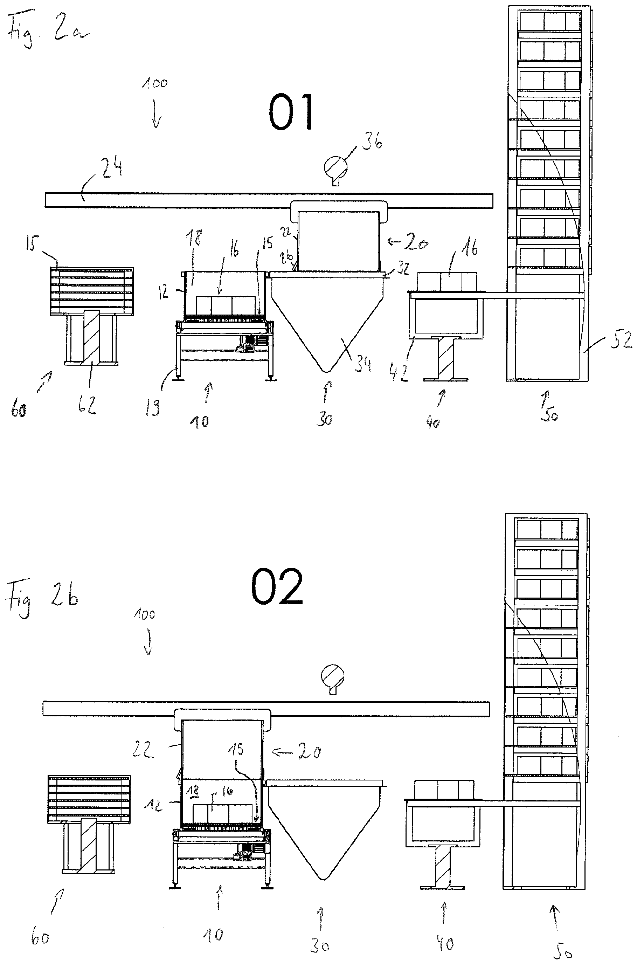

Im Folgenden wird mit Bezug auf die **Figuren 2a bis 5b** ein Verfahren gemäß einer ersten Ausführungsform der Erfindung beschrieben zum Entpacken eines mittels eines generativen Fertigungsverfahrens hergestellten Bauteils 16 aus einer Partikelmaterial-Schüttung 18 aus nicht-verfestigtem Partikelmaterial (im Folgenden auch "Entpackverfahren"), welche gemeinsam mit dem Bauteil in einem Aufnahmeraum angeordnet ist, der umfangsseitig von einer nach oben hin offenen, vertikalen Umfangswandstruktur 12 einer Baubox 10 begrenzt wird, in der eine höhenverstellbare Bauplattform 14 aufgenommen ist, auf der die das Bauteil enthaltende Partikelmaterial-Schüttung angeordnet ist.

Bei dem Entpackverfahren gemäß der ersten Ausführungsform der Erfindung wird der Hilfsrahmen 20, der die nach unten hin offene, vertikale Umfangswandstruktur 22 hat und eingerichtet ist, um die das Bauteil 16 enthaltende Partikelmaterial-Schüttung 18 aufzunehmen, zunächst vertikal über der vertikalen Umfangswandstruktur 12 der Baubox 10 angeordnet. Dies ist in den Figuren 2a und 2b verdeutlicht. Mit anderen Worten wird der Hilfsrahmen in seiner ersten Position angeordnet.

Wie aus Figur 2b ersichtlich, ist die vertikale Umfangswandstruktur 22 des Hilfsrahmens 20 dabei zum Beispiel in Verlängerung der vertikalen Umfangswandstruktur 12 der Baubox 10 angeordnet, zum Beispiel mit vertikalem Spiel. Die Baubox befindet sich in ihrer Baubox-Entpackungs-Position und nimmt eine Partikelmaterial-Schüttung 18 aus nicht-verfestigtem Partikelmaterial auf, die ein oder mehrere Bauteile 16 enthält. Die Partikelmaterial-Schüttung 18 ist hier beispielgebend auf einer porösen, plattenförmigen Struktur 15 angeordnet, die wiederum auf der Bauplattform 14 angeordnet ist, d.h. die poröse, plattenförmige Struktur 15 ist zwischen der Bauplattform 14 und der das Bauteil 16 enthaltenden Partikelmaterial-Schüttung 18 in der Baubox 10 angeordnet.

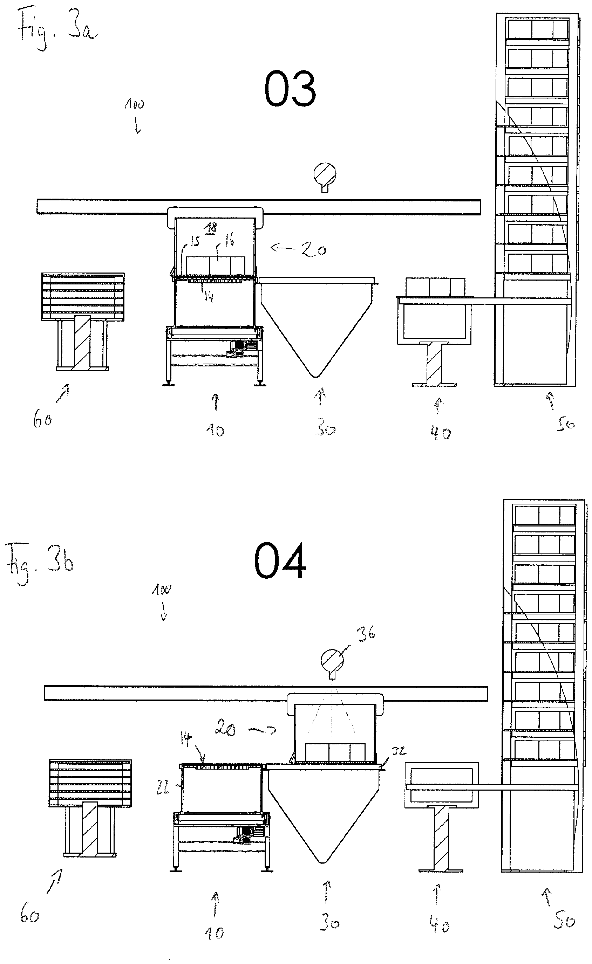

Wie in Figur 3a angedeutet, wird bei dem Entpackverfahren gemäß dieser Ausführungsform als nächstes die Bauplattform 14 nach oben gefahren, so dass die das Bauteil 16 enthaltende Partikelmaterial-Schüttung 18 von der Baubox 10 an den Hilfsrahmen 20 übergeben wird und in letzterem aufgenommen ist. Gemäß dieser Ausführungsform wird dabei auch die poröse, plattenförmige Struktur 15 an den Hilfsrahmen 20 übergeben bzw. in dessen Hohlraum hinein bewegt.

Wie in Figur 3b angedeutet, werden bei dem Entpackverfahren gemäß dieser Ausführungsform als nächstes der Hilfsrahmen 20 mit der darin aufgenommenen, das Bauteil 16 enthaltenden Partikelmaterial-Schüttung 18 und die Baubox 10 voneinander weg bewegt, so dass die Baubox 10 frei für einen nächsten Baujob ist. Gemäß dieser Ausführungsform wird dabei die poröse, plattenförmige Struktur 15 zusammen mit der Partikelmaterial-Schüttung 18 und dem Hilfsrahmen 20 von der Baubox 10 relativ weg bewegt wird. Wie gezeigt, kann der Hilfsrahmen 20 mit der darin aufgenommenen, das Bauteil 16 enthaltenden Partikelmaterial-Schüttung 18 zum Beispiel seitlich von der Baubox 10 weg bewegt werden. Wie gezeigt, kann der Hilfsrahmen 20 mit der darin aufgenommenen, das Bauteil 16 enthaltenden Partikelmaterial-Schüttung 18 zum Beispiel in eine Position vertikal über der Partikelmaterial-Auffangvorrichtung 30 bewegt werden. Optional kann die poröse, plattenförmige Struktur 15 an dem Hilfsrahmen verriegelt werden. Dies ist aber nicht zwingend erforderlich, und die poröse, plattenförmige Struktur 15 kann sich zum Beispiel an der Partikelmaterial-Auffangvorrichtung 30 abstützen, zum Beispiel an deren porösen Partikelmaterial-Ablass-Struktur 32.

Wie in Figur 1 b angedeutet, kann bereits während des seitlichen Bewegens des Hilfsrahmens 20 Partikelmaterial nach unten hin aus dem Hilfsrahmen 20 durch die poröse, plattenförmige Struktur 15 hindurch in die Partikelmaterial-Auffangvorrichtung 30 hinein abgelassen werden. In der in Figur 3b gezeigten zweiten Position des Hilfsrahmens 20 kann weiteres Partikelmaterial nach unten hin aus dem Hilfsrahmen 20 durch die poröse, plattenförmige Struktur 15 hindurch in die Partikelmaterial-Auffangvorrichtung 30 hinein abgelassen werden. Optional kann das Bauteil 16 zusätzlich mittels der Blasvorrichtung 36 abgeblasen werden.

Folglich ist das Bauteil 16 zumindest teilweise aus der Partikelmaterial-Schüttung 18 entpackt.

Schließlich wird das entpackte Bauteil 16 noch aus dem Hilfsrahmen 20 entfernt. Dies kann zum Beispiel mittels der optionalen Bauteil-Übergabestation 40 erfolgen.

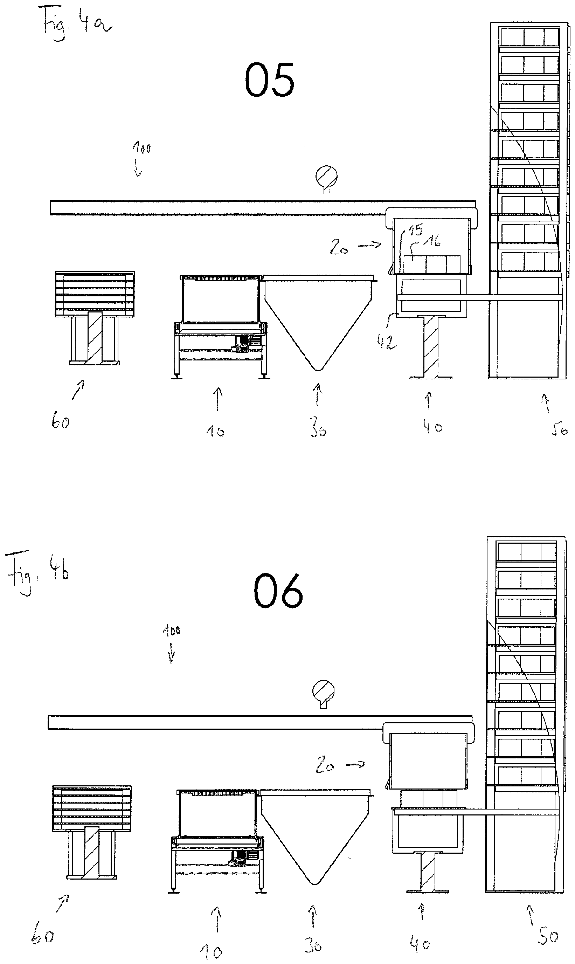

Wie in den Figuren 4a und 4b angedeutet, kann hierzu zum Beispiel das zumindest teilweise entpackte Bauteil 16 zusammen mit der porösen, plattenförmigen Struktur 15 und dem Hilfsrahmen 20 von der Partikelmaterial-Auffangvorrichtung 30 zu der Bauteil-Übergabestation 40 bewegt werden, wo das Bauteil 16 und die poröse, plattenförmige Struktur 15 von dem Hilfsrahmen 20 getrennt werden.

Hierzu kann zum Beispiel die Ablagestruktur 42 auf Höhe der Partikelmaterial-Auffangvorrichtung 30 verfahren werden (siehe Figur 4a) und dann das zumindest teilweise entpackte Bauteil 16 zusammen mit der porösen, plattenförmigen Struktur 15 und dem Hilfsrahmen 20 von der Partikelmaterial-Auffangvorrichtung 30 zu der Bauteil-Übergabestation 40 bewegt werden. Anschließend kann wie in Figur 4b angedeutet, die Ablagestruktur 42 abgesenkt werden, so dass der Hilfsrahmen 20 frei ist bzw. das Bauteil 16 und die poröse, plattenförmige Struktur 15 von dem Hilfsrahmen 20 getrennt sind.

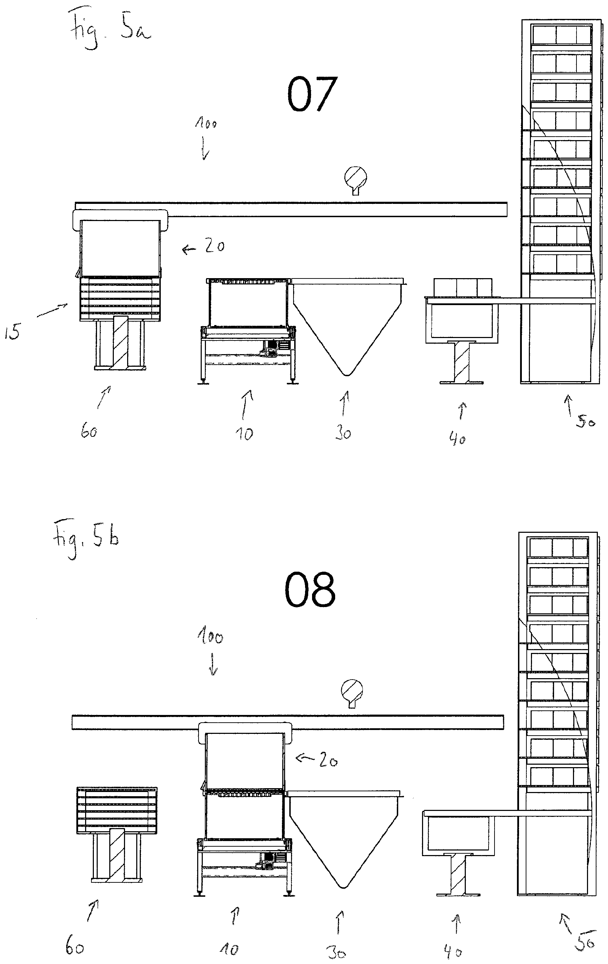

Wie in Figur 5a gezeigt, kann der Hilfsrahmen 20 optional noch in seine vierte Position verfahren werden, um eine poröse, plattenförmige Struktur 15 zu greifen.

Wie in Figur 5b gezeigt, kann der Hilfsrahmen 20 dann wieder in die erste Position gefahren werden, um die Baubox 10 mit der porösen, plattenförmigen Struktur 15 zu bestücken.

Wie ferner aus den Figuren 5a und 5b ersichtlich, kann das Bauteil 16 von der Bauteil-Übergabestation 40 aus zum Beispiel dem Bauteil-Vorrat 50 zugeführt werden, zum Beispiel gemeinsam mit der porösen, plattenförmigen Struktur 15.

Einer oder mehrere oder alle der oben beschriebenen Verfahrensabschnitte können automatisiert ablaufen.

Mit dem beschriebenen Verfahren ist es dabei möglich, ein oder mehrere Bauteile auf einfache, zuverlässige und schnelle Weise zu entpacken, und zwar mit einer bestehenden/üblichen Baubox, d.h. ohne das Erfordernis einer aufwendigen Nachrüstung oder Umrüstung der Baubox, zum Beispiel von deren Bauplattform.

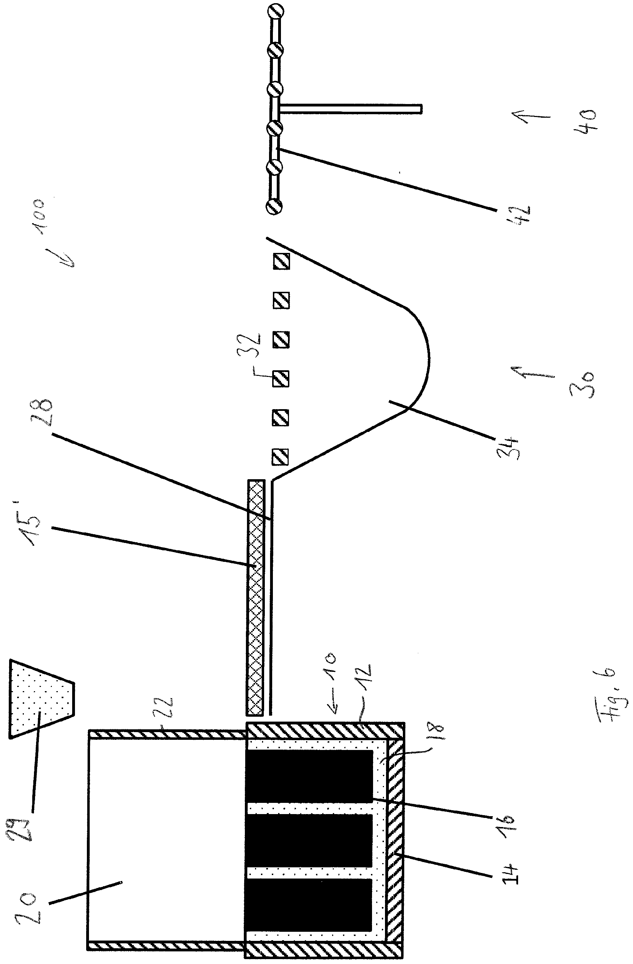

Die **Figuren 6 bis 13** veranschaulichen eine Entpackvorrichtung und ein Entpackverfahren gemäß einer zweiten Ausführungsform der Erfindung.

Auf eine wiederholte Beschreibung von bereits beschriebenen Merkmalen wird weitestgehend verzichtet, und es werden hauptsächlich die Unterschiede zu der Entpackvorrichtung und dem Entpackverfahren gemäß der ersten Ausführungsform der Erfindung beschrieben.

Auch wenn bestimmte Komponenten der ersten Ausführungsform in den Figuren 6 bis 13 nicht gezeigt sind, wie zum Beispiel das Fördersystem 19, die Führungsstruktur 24 des Hilfsrahmens 20, die Reinigungsvorrichtung 26, die Blasvorrichtung 36 und das Regal 52, sollte es verständlich sein, dass diese Komponenten analog auch in dieser Ausführungsform vorhanden sein können.

Ein Unterschied zu der ersten Ausführungsform besteht darin, dass gemäß der zweiten Ausführungsform die Baubox 10 vordem Bauprozess nicht mit einer porösen, plattenförmigen Struktur 15 bestückt wird, so dass nach der Fertigung des mindestens einen Bauteils 16 (hier beispielgebend drei) keine poröse, plattenförmige Struktur 15 zwischen der Schüttung 18 und der Bauplattform 14 angeordnet ist.

Stattdessen kann gemäß dieser Ausführungsform zum Beispiel eine "externe" poröse, plattenförmige Struktur 15' verwendet werden, über welcher der Hilfsrahmen 20 mit der darin aufgenommenen, das Bauteil 16 enthaltenden Partikelmaterial-Schüttung 18 im Verlauf des Verfahrens angeordnet wird bzw. über welche der Hilfsrahmen 20 relativbewegt wird.

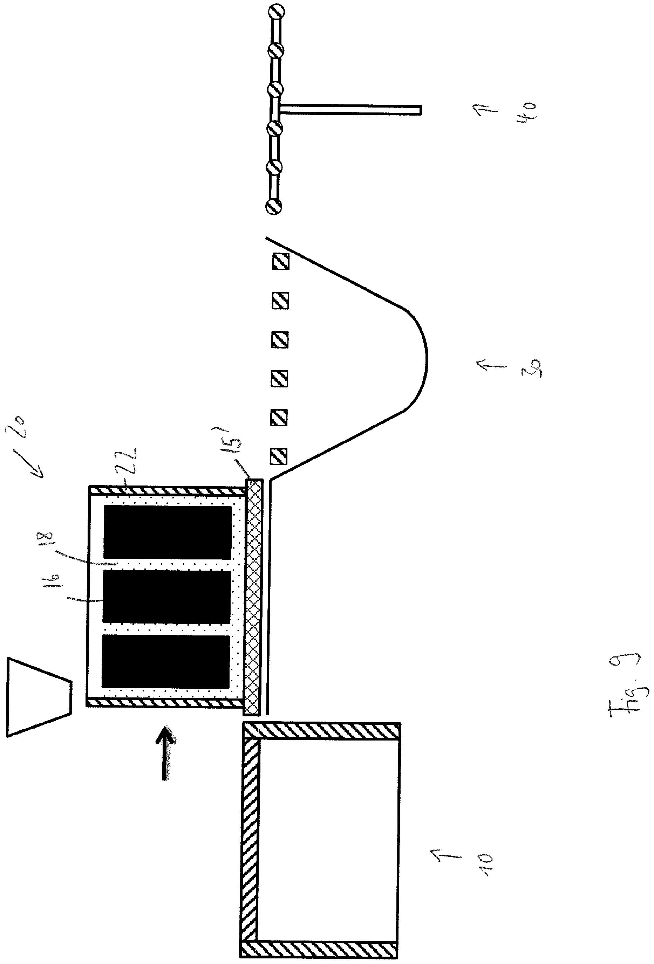

Die "externe" poröse, plattenförmige Struktur 15' kann zum Beispiel seitlich neben der Baubox 10 im Wesentlich in Höhe von deren oberem Randbereich angeordnet werden/sein. Dabei kann zum Beispiel der Hilfsrahmen 20 nach Übergabe der Partikelmaterial-Schüttung 18 seitlich bewegt werden in eine Position vertikal über der porösen, plattenförmigen Struktur 15' (siehe Figur 9).

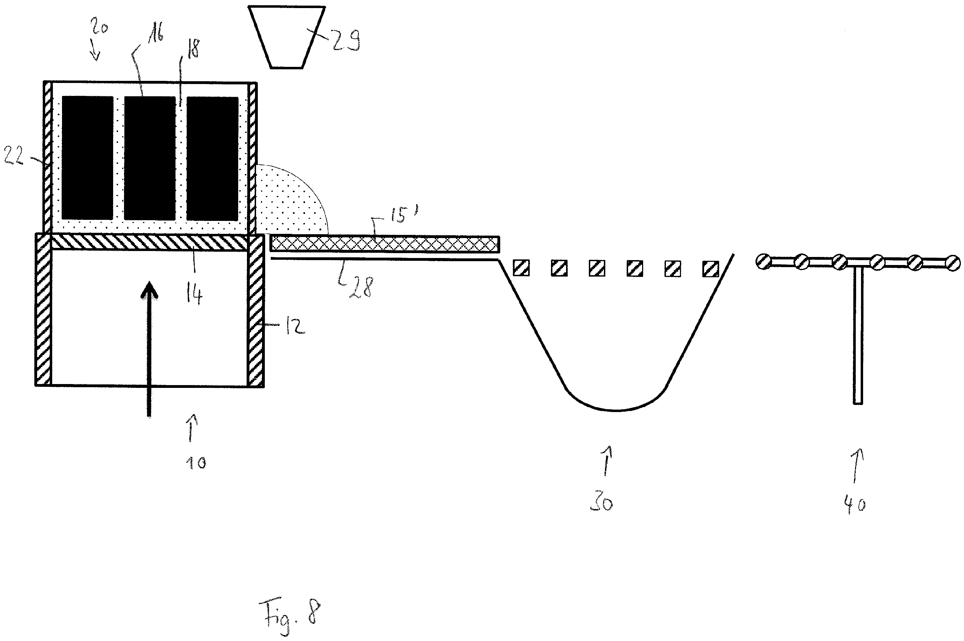

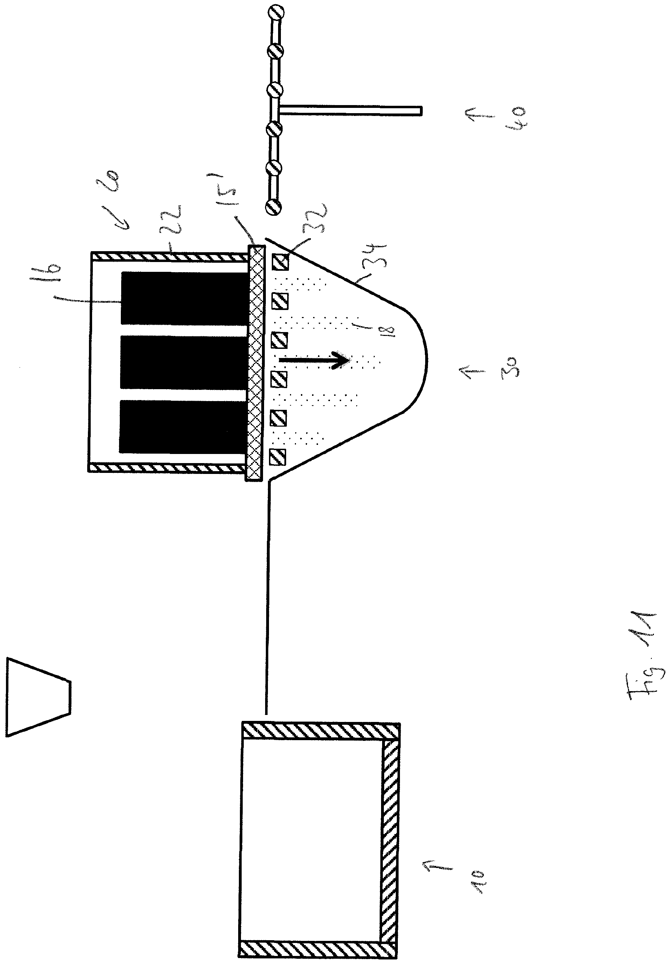

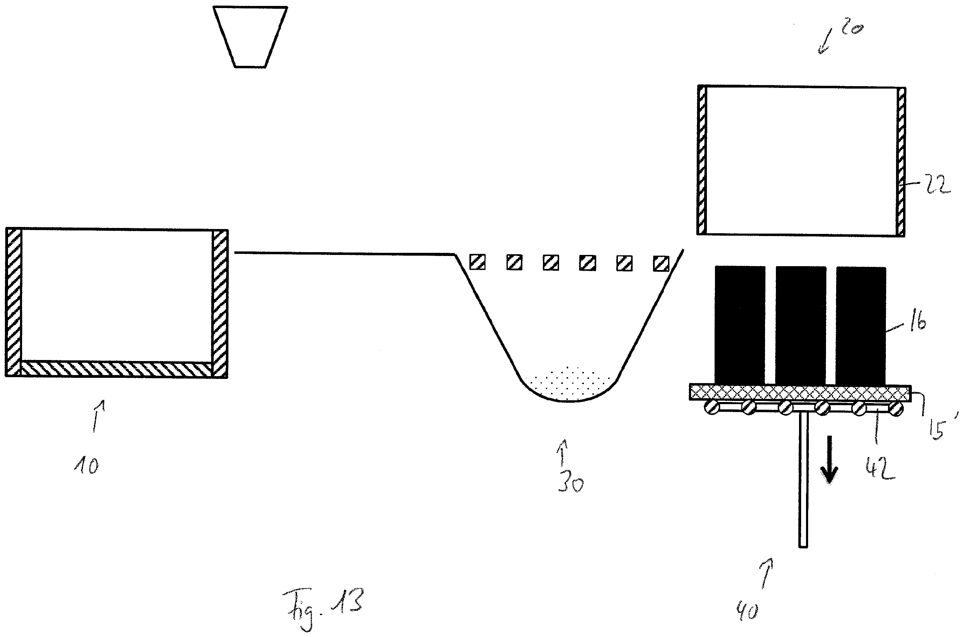

Ähnlich wie in der ersten Ausführungsform, wird bei dem Entpackverfahren gemäß der zweiten Ausführungsform zunächst - wie in Figur 6 gezeigt - der Hilfsrahmen 20 mit seiner vertikalen Umfangswandstruktur 22 vertikal über der vertikalen Umfangswandstruktur 12 der Baubox 10 angeordnet, anschließend wird - wie in Figur 8 gezeigt - die Bauplattform 14 nach oben gefahren, so dass die das Bauteil 16 enthaltende Partikelmaterial-Schüttung 18 von der Baubox 10 an den Hilfsrahmen 20 übergeben wird und in letzterem aufgenommen ist, daraufhin werden - wie in Figur 9 gezeigt - der Hilfsrahmen 20 mit der darin aufgenommenen, das Bauteil 16 enthaltenden Partikelmaterial-Schüttung 18 und die Baubox 10 voneinander weg bewegt, so dass die Baubox 10 frei für einen neuen Baujob ist, daraufhin wird - wie in Figur 11 gezeigt - das Bauteil zumindest teilweise aus der Partikelmaterial-Schüttung entpackt, und schließlich wird - wie in Figur 13 gezeigt - das Bauteil 16 aus dem Hilfsrahmen 20 entfernt.

Wie bereits erwähnt und in Figur 9 gezeigt, kann gemäß der zweiten Ausführungsform der Hilfsrahmen 20 mit der darin aufgenommenen, das Bauteil 16 enthaltenden Partikelmaterial-Schüttung 18 zum Beispiel vertikal über einer (externen) porösen, plattenförmigen Struktur 15' angeordnet werden.

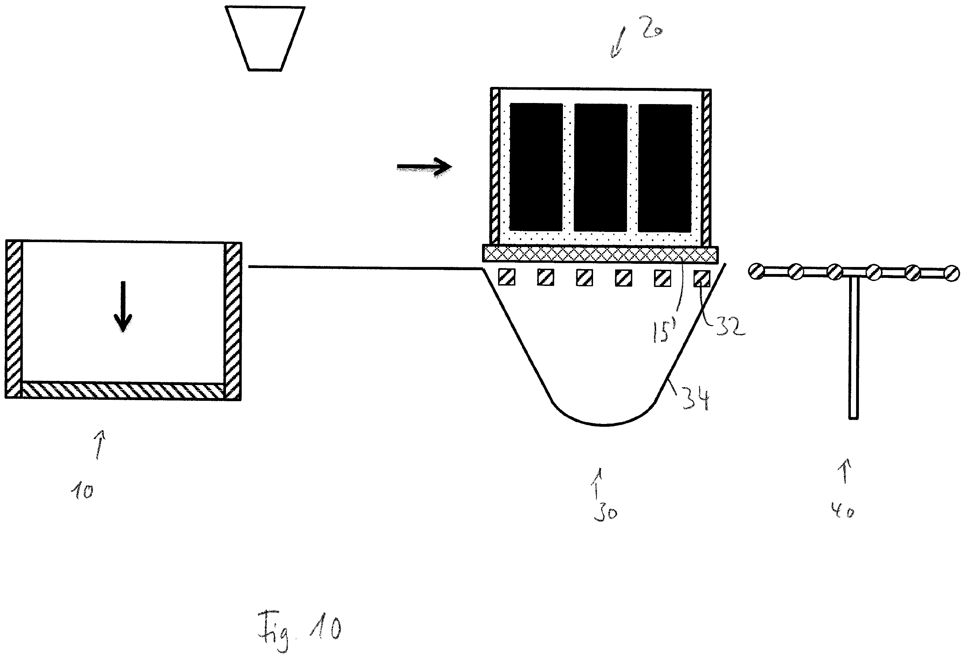

Nachdem der Hilfsrahmen 20 mit der darin aufgenommenen, das Bauteil 16 enthaltenden Partikelmaterial-Schüttung 18 über die poröse, plattenförmige Struktur 15' bewegt wurde, können zum Beispiel die poröse, plattenförmige Struktur 15' und der Hilfsrahmen 20 gemeinsam über die Partikelmaterial-Auffangvorrichtung 30 bewegt werden, wie in Figur 10 gezeigt. Dabei kann das zumindest eine Bauteil 16 zumindest teilweise entpackt werden, indem Partikelmaterial von dem Hilfsrahmen 20, durch die poröse, plattenförmige Struktur 15' in die Partikelmaterial-Auffangvorrichtung 30 nach unten rieselt. Siehe Figur 11.

Im Folgenden wird das mindestens eine entpackte Bauteil 16 noch aus dem Hilfsrahmen 20 entfernt. Dies kann zum Beispiel mittels der optionalen Bauteil-Übergabestation 40 erfolgen (alternativ kann das Bauteil 16 zum Beispiel durch die obere Öffnung des Hilfsrahmens entnommen werden).

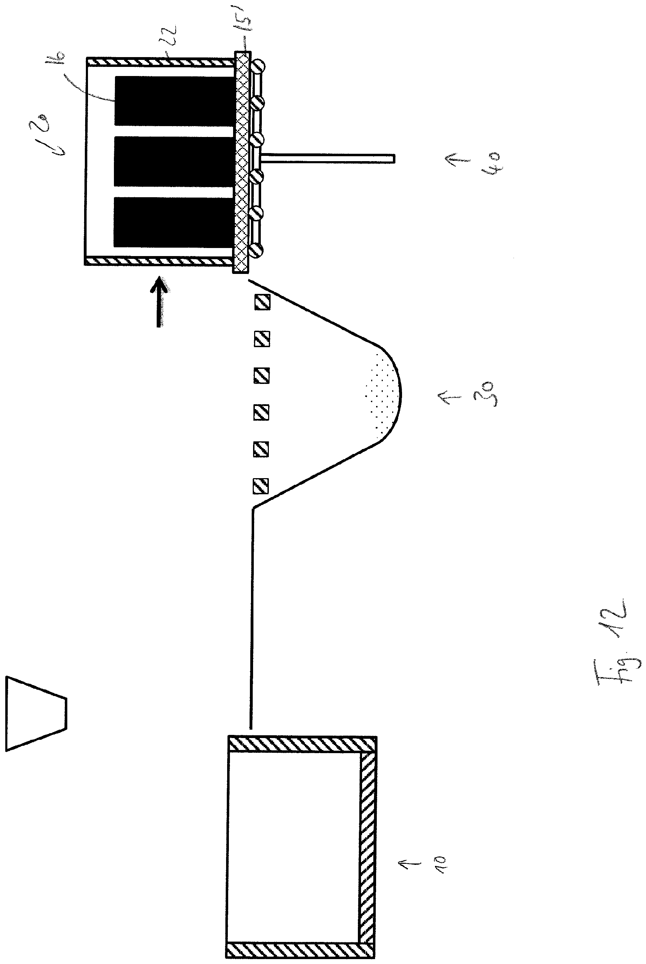

Wie in den Figuren 12 und 13 angedeutet, kann hierzu zum Beispiel das zumindest teilweise entpackte Bauteil 16 zusammen mit der porösen, plattenförmigen Struktur 15 und dem Hilfsrahmen 20 von der Partikelmaterial-Auffangvorrichtung 30 zu der Bauteil-Übergabestation 40 bewegt werden, wo das Bauteil 16 und die poröse, plattenförmige Struktur 15 von dem Hilfsrahmen 20 getrennt werden.

Hierzu kann zum Beispiel die Ablagestruktur 42 auf Höhe der Partikelmaterial-Auffangvorrichtung 30 angeordnet sein/verfahren werden (siehe Figur 12) und dann das zumindest teilweise entpackte Bauteil 16 zusammen mit der porösen, plattenförmigen Struktur 15' und dem Hilfsrahmen 20 von der Partikelmaterial-Auffangvorrichtung 30 zu der Bauteil-Übergabestation 40 bewegt werden. Anschließend kann wie in Figur 13 angedeutet, die Ablagestruktur 42 abgesenkt werden, so dass der Hilfsrahmen 20 frei ist bzw. das Bauteil 16 und die poröse, plattenförmige Struktur 15' von dem Hilfsrahmen 20 getrennt sind.

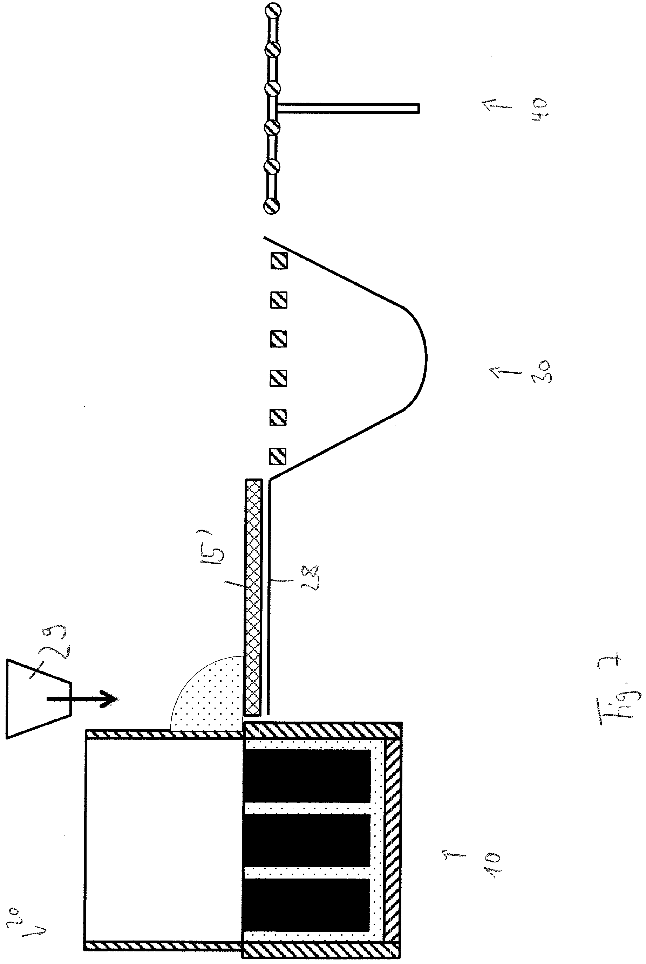

Um während der in Figur 9 veranschaulichten, seitlichen Bewegung des Hilfsrahmens 20 in die Position vertikal über der porösen, plattenförmigen Struktur 15' ein Ablassen von Partikelmaterial aus dem Hilfsrahmen 20 durch die poröse, plattenförmige Struktur 15' zu reduzieren, können die Öffnungen der porösen, plattenförmigen Struktur 15' zum Beispiel mit Partikelmaterial gefüllt werden und/oder verdeckt werden. Dies ist in den Figuren 6 bis 9 gezeigt. Hierdurch kann vermieden werden, dass das mindestens eine Bauteil während der Relativbewegung zu der porösen, plattenförmigen Struktur 15' an letzterer reibt und dadurch beschädigt wird. Wie in den Figuren 6 und 7 gezeigt, kann aus einem Partikelmaterial-Behälter 29 Partikelmaterial, zum Beispiel Sand, auf die poröse, plattenförmige Struktur 15' gegeben und über diese verteilt werden, zum Beispiel indem der Hilfsrahmen einen Haufen aus Partikelmaterial vor sich her schiebt, so dass die Öffnungen der porösen, plattenförmigen Struktur 15' mit Partikelmaterial aufgefüllt werden. Unter der porösen, plattenförmigen Struktur 15' ist hier beispielgebend eine Plattenstruktur 28 angeordnet, mit der die Öffnungen der porösen, plattenförmigen Struktur 15' verdeckt werden, um ein nach unten Durchrieseln von Partikelmaterial während der Relativbewegung zu vermeiden.

Die poröse, plattenförmige Struktur 15' kann für ihre Fahrt von der in der Figur 7 gezeigten Position zu der in der Figur 12 gezeigten Position zum Beispiel von einem horizontalen Linearantrieb angetrieben werden. In der in der Figur 12 gezeigten Position kann die poröse, plattenförmige Struktur 15' zum Beispiel von dem Antrieb entkoppelt werden, um ein Absenken der porösen, plattenförmigen Struktur 15' zusammen mit dem Bauteil 16 zu ermöglichen.

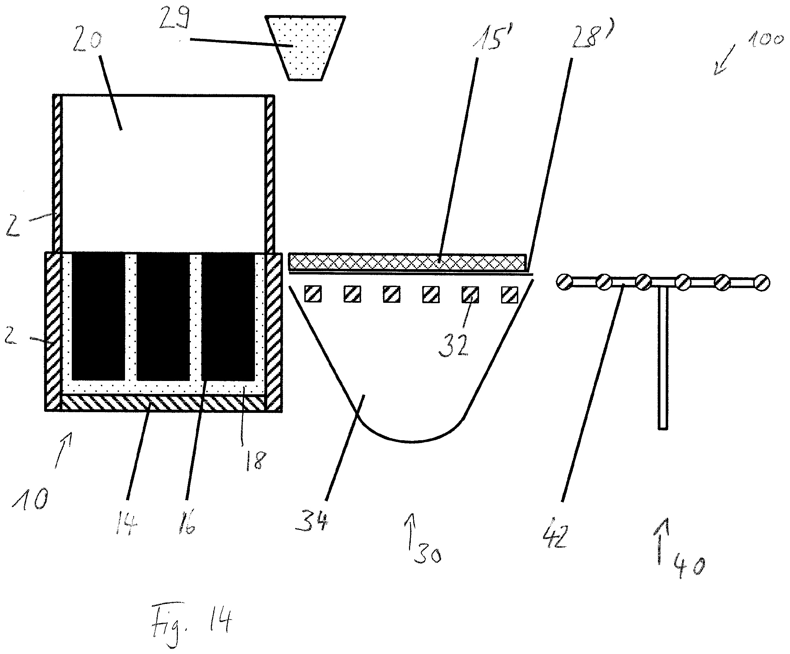

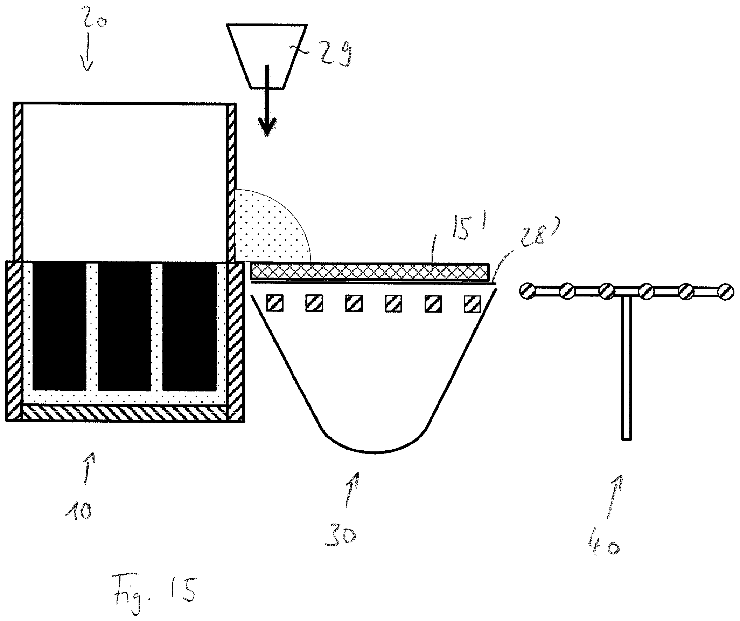

Die **Figuren 14 bis 21** veranschaulichen eine Entpackvorrichtung und ein Entpackverfahren gemäß einer dritten Ausführungsform der Erfindung.

Auf eine wiederholte Beschreibung von bereits beschriebenen Merkmalen wird weitestgehend verzichtet, und es werden hauptsächlich die Unterschiede zu der Entpackvorrichtung und dem Entpackverfahren gemäß der ersten und der zweiten Ausführungsform der Erfindung beschrieben.

Auch wenn bestimmte Komponenten in den Figuren 14 bis 21 nicht gezeigt sind, wie zum Beispiel das Fördersystem 19, die Führungsstruktur 24 des Hilfsrahmens 20, die Reinigungsvorrichtung 26, die Blasvorrichtung 36 und das Regal 52 der ersten Ausführungsform, sollte es verständlich sein, dass diese Komponenten analog auch in der dritten Ausführungsform vorhanden sein können.

Wie bei der zweiten Ausführungsform, wird auch in der dritten Ausführungsform eine "externe" poröse, plattenförmige Struktur 15' verwendet, über welcher der Hilfsrahmen 20 mit der darin aufgenommenen, das Bauteil 16 enthaltenden Partikelmaterial-Schüttung 18 im Verlauf des Verfahrens angeordnet wird bzw. über welche der Hilfsrahmen 20 relativbewegt wird.

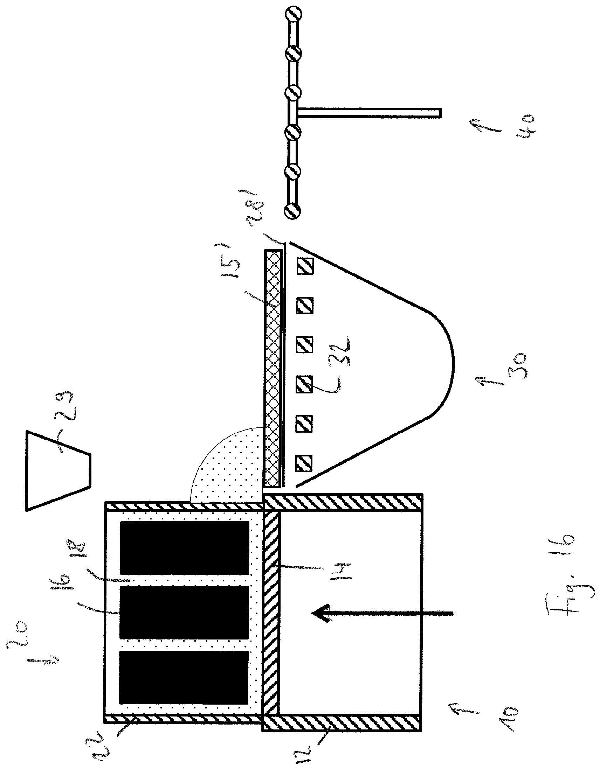

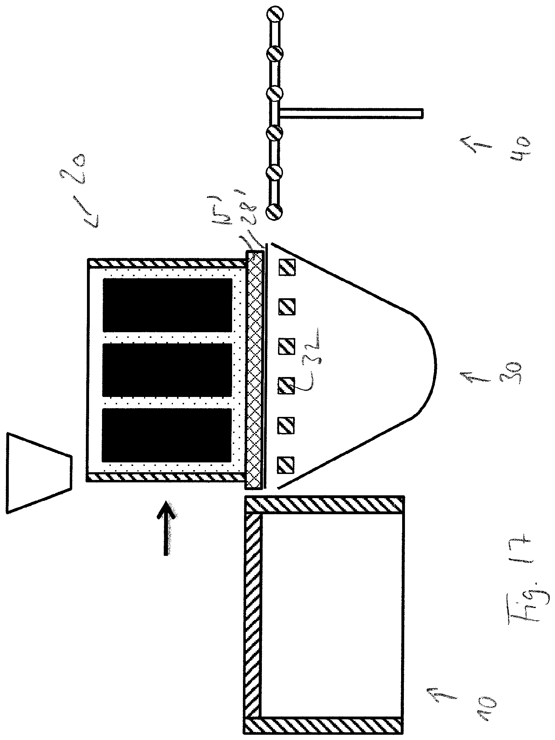

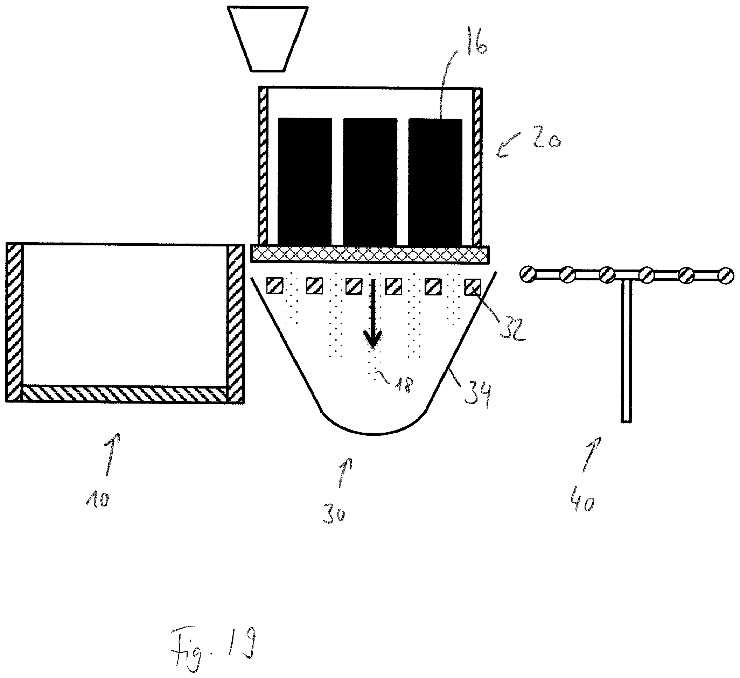

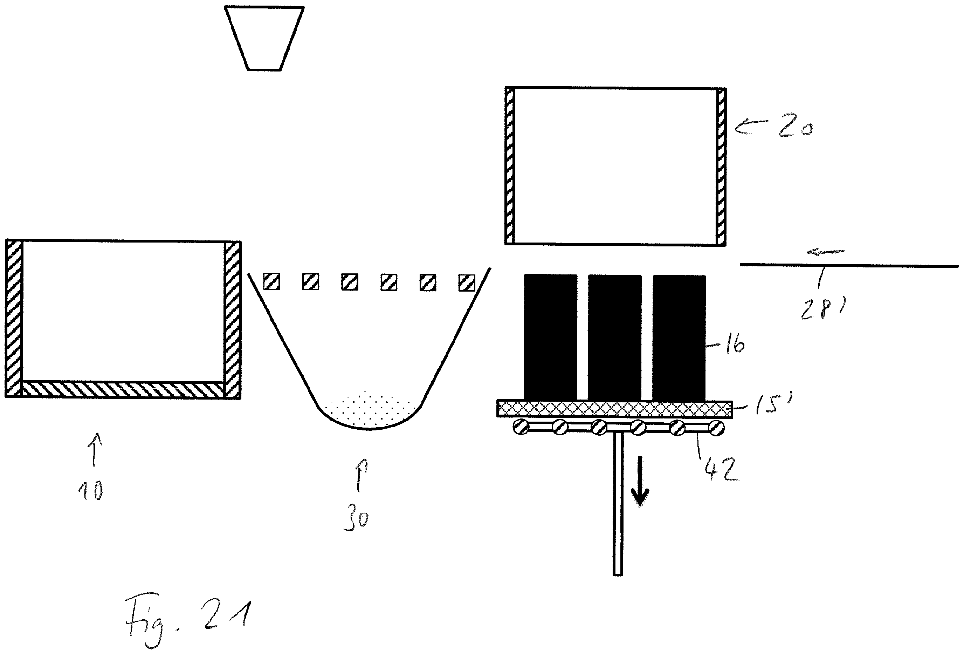

Ähnlich wie in der ersten und der zweiten Ausführungsform, wird bei dem Entpackverfahren gemäß der dritten Ausführungsform zunächst - wie in Figur 14 gezeigt - der Hilfsrahmen 20 mit seiner vertikalen Umfangswandstruktur 22 vertikal über der vertikalen Umfangswandstruktur 12 der Baubox 10 angeordnet, anschließend wird - wie in Figur 16 gezeigt - die Bauplattform 14 nach oben gefahren, so dass die das Bauteil 16 enthaltende Partikelmaterial-Schüttung 18 von der Baubox 10 an den Hilfsrahmen 20 übergeben wird und in letzterem aufgenommen ist, daraufhin werden - wie in Figur 17 gezeigt - der Hilfsrahmen 20 mit der darin aufgenommenen, das Bauteil 16 enthaltenden Partikelmaterial-Schüttung 18 und die Baubox 10 voneinander weg bewegt, so dass die Baubox 10 frei für einen neuen Baujob ist, daraufhin wird - wie in Figur 19 gezeigt - das Bauteil 16 zumindest teilweise aus der Partikelmaterial-Schüttung 18 entpackt, und schließlich wird - wie in Figur 21 gezeigt - das Bauteil 16 aus dem Hilfsrahmen 20 entfernt.

Anders als in der zweiten Ausführungsform ist die poröse, plattenförmige Struktur 15' gemäß der dritten Ausführungsform bereits über der Partikelmaterial-Auffangvorrichtung 30 angeordnet.

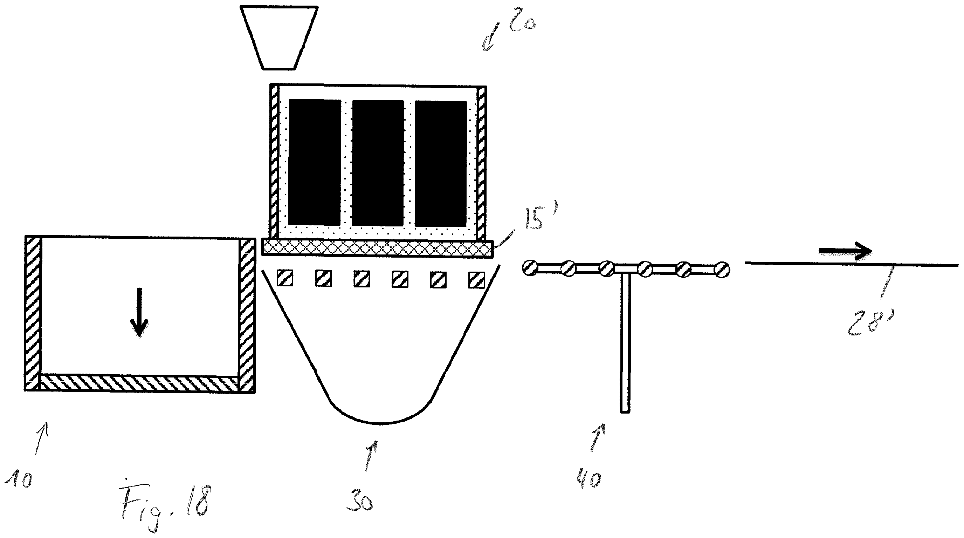

Ferner ist in der dritten Ausführungsform eine bewegbare Schieberplatte 28' vorgesehen, die die Öffnungen der porösen, plattenförmigen Struktur 15' während einer seitlichen Relativbewegung zwischen Hilfsrahmen 20 und poröser, plattenförmiger Struktur 15'verdeckt. Siehe zum Beispiel Figur 17. Wie in Figur 18 gezeigt, können die Öffnungen der porösen, plattenförmigen Struktur 15' von der Schieberplatte 28' anschließend freigegeben werden, um ein zumindest teilweises Entpacken des Bauteils 16 zu ermöglichen; siehe Figur 19. Später kann die Schieberplatte 28' wieder in ihre Ausgangsposition zurück bewegt werden; siehe Figur 21.

Im Folgenden wird das mindestens eine entpackte Bauteil 16 noch aus dem Hilfsrahmen 20 entfernt. Dies kann zum Beispiel mittels der optionalen Bauteil-Übergabestation 40 erfolgen.

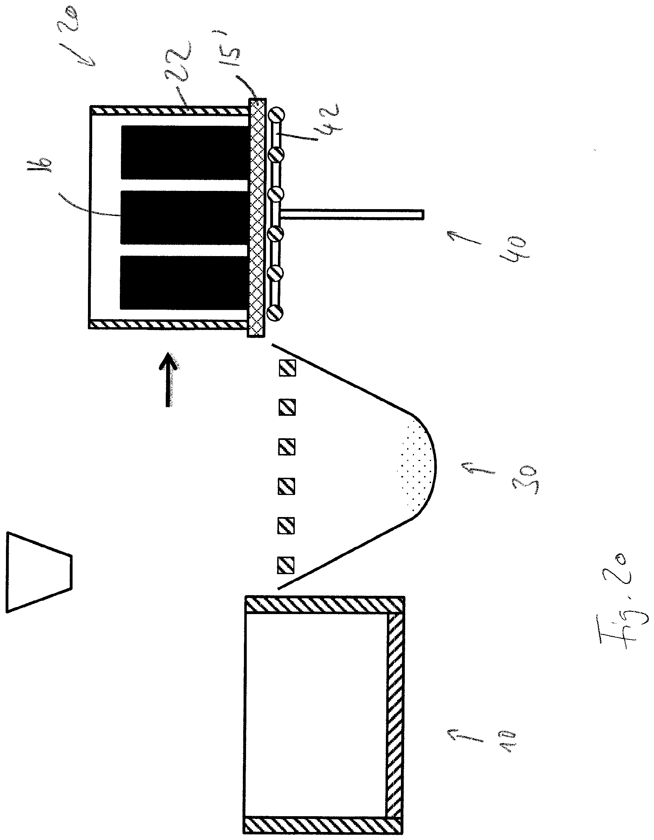

Die in diesem Zusammenhang in den Figuren 20 und 21 angedeuteten Schritte entsprechen dabei im Wesentlichen den in den Figuren 12 und 13 veranschaulichten Schritten.

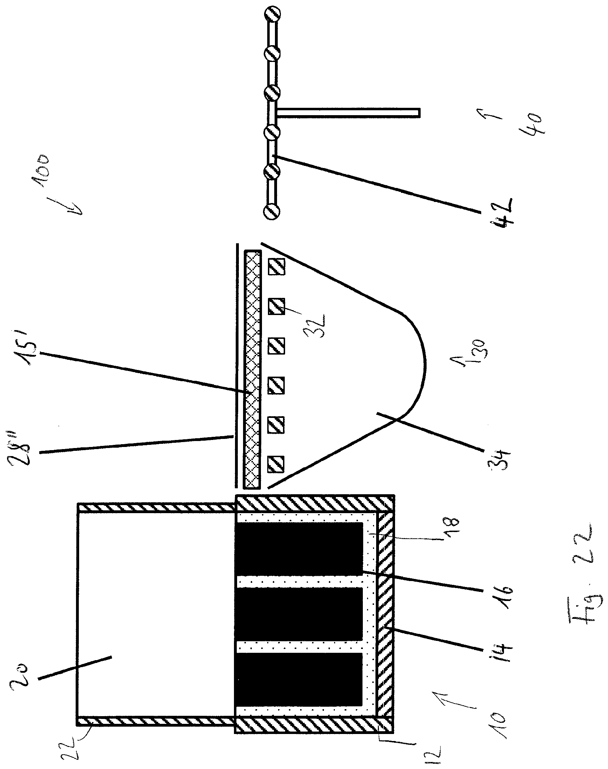

Die **Figuren 22 bis 28** veranschaulichen eine Entpackvorrichtung und ein Entpackverfahren gemäß einer vierten Ausführungsform der Erfindung.

Auf eine wiederholte Beschreibung von bereits beschriebenen Merkmalen wird weitestgehend verzichtet, und es werden hauptsächlich die Unterschiede zu der Entpackvorrichtung und dem Entpackverfahren gemäß der ersten, zweiten und dritten Ausführungsform der Erfindung beschrieben.

Auch wenn bestimmte Komponenten in den Figuren 22 bis 28 nicht gezeigt sind, wie zum Beispiel das Fördersystem 19, die Führungsstruktur 24 des Hilfsrahmens 20, die Reinigungsvorrichtung 26, die Blasvorrichtung 36 und das Regal 52 der ersten Ausführungsform, sollte es verständlich sein, dass diese Komponenten analog auch in der vierten Ausführungsform vorhanden sein können.

Wie bei der zweiten und der dritten Ausführungsform, wird auch in der vierten Ausführungsform eine "externe" poröse, plattenförmige Struktur 15' verwendet, über welcher der Hilfsrahmen 20 mit der darin aufgenommenen, das Bauteil 16 enthaltenden Partikelmaterial-Schüttung 18 im Verlauf des Verfahrens angeordnet wird bzw. über welche der Hilfsrahmen 20 relativbewegt wird.

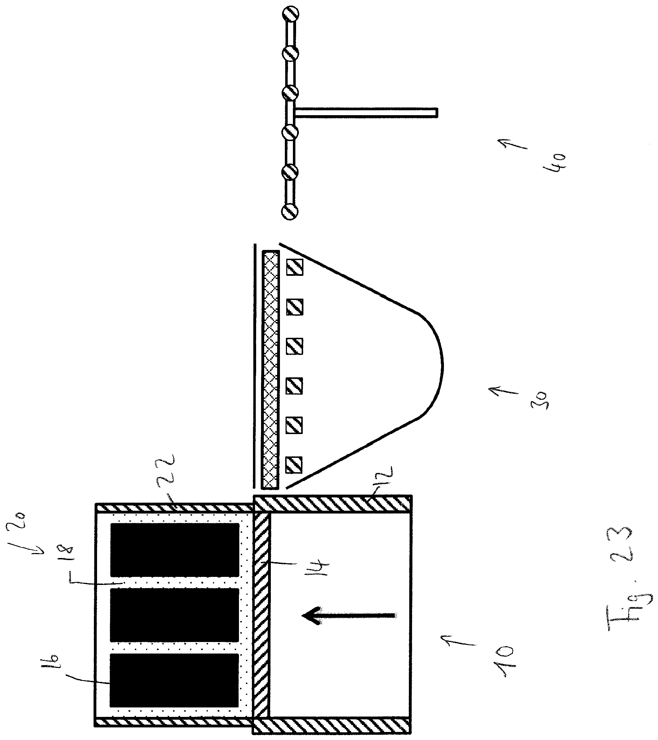

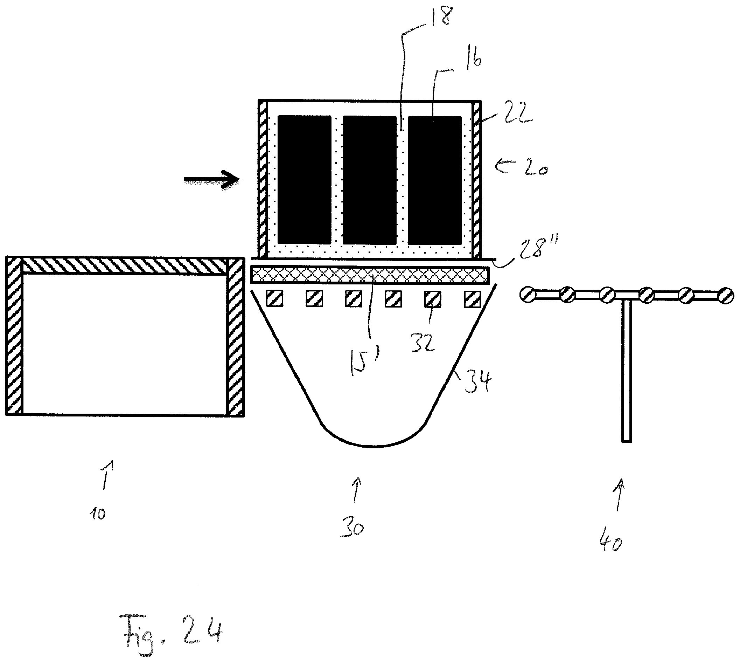

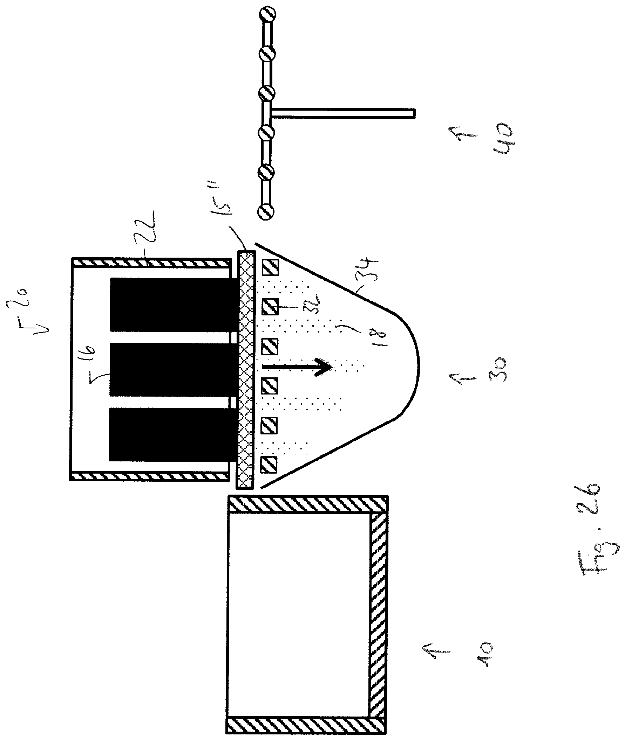

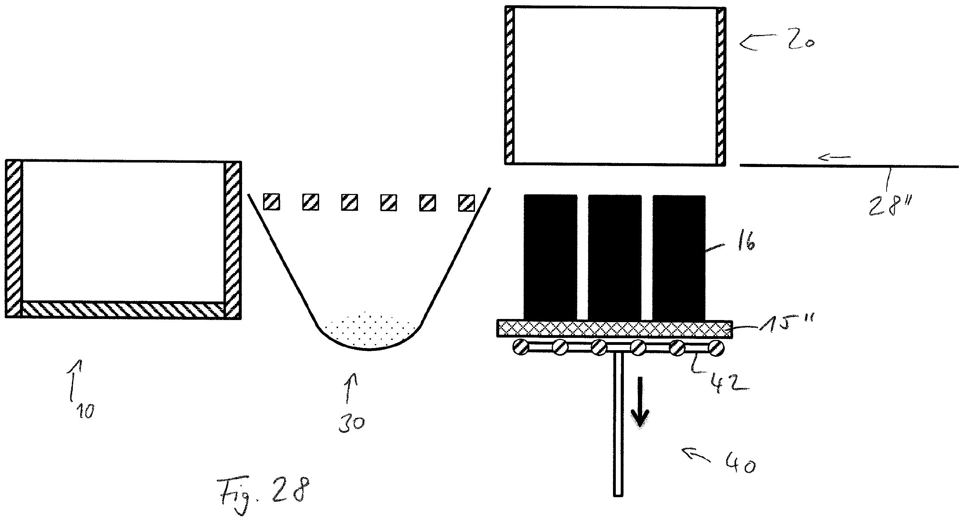

Ähnlich wie in der ersten, der zweiten und der dritten Ausführungsform, wird bei dem Entpackverfahren gemäß der vierten Ausführungsform zunächst - wie in Figur 22 gezeigt - der Hilfsrahmen 20 mit seiner vertikalen Umfangswandstruktur 22 vertikal über der vertikalen Umfangswandstruktur 12 der Baubox 10 angeordnet, anschließend wird - wie in Figur 23 gezeigt - die Bauplattform 14 nach oben gefahren, so dass die das Bauteil 16 enthaltende Partikelmaterial-Schüttung 18 von der Baubox 10 an den Hilfsrahmen 20 übergeben wird und in letzterem aufgenommen ist, daraufhin werden - wie in Figur 24 gezeigt - der Hilfsrahmen 20 mit der darin aufgenommenen, das Bauteil 16 enthaltenden Partikelmaterial-Schüttung 18 und die Baubox 10 voneinander weg bewegt, so dass die Baubox 10 frei für einen neuen Baujob ist, daraufhin wird - wie in Figur 26 gezeigt - das Bauteil 16 zumindest teilweise aus der Partikelmaterial-Schüttung 18 entpackt, und schließlich wird - wie in Figur 28 gezeigt - das Bauteil 16 aus dem Hilfsrahmen 20 entfernt.

Wie in der dritten Ausführungsform ist die poröse, plattenförmige Struktur 15' gemäß der vierten Ausführungsform bereits über der Partikelmaterial-Auffangvorrichtung 30 angeordnet.

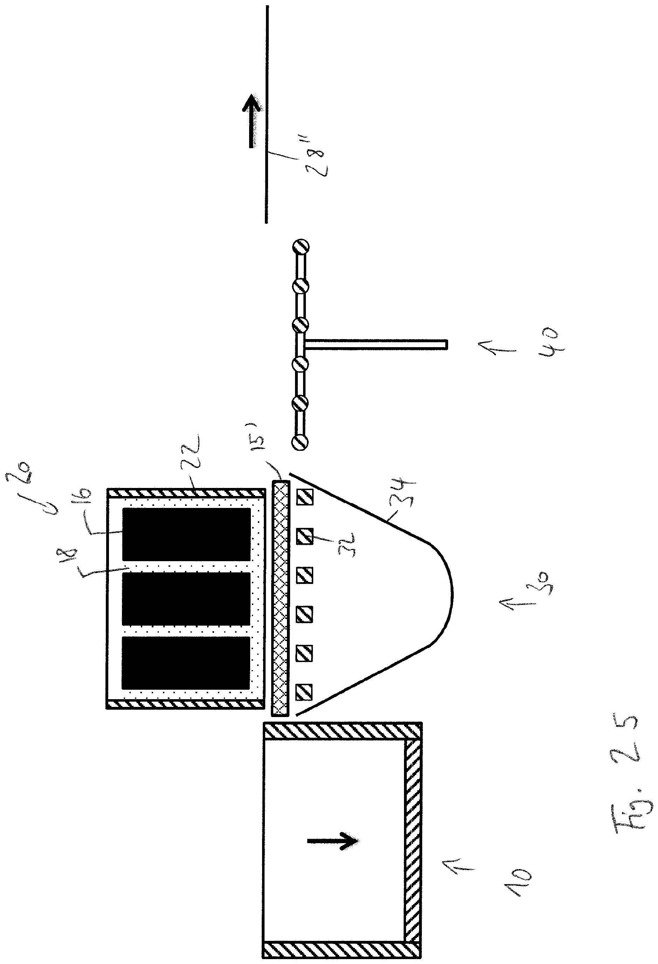

Anders als in der dritten Ausführungsform, ist in der vierten Ausführungsform die bewegbare Schieberplatte 28", die die Öffnungen der porösen, plattenförmigen Struktur 15' während einer seitlichen Relativbewegung zwischen Hilfsrahmen 20 und poröser, plattenförmiger Struktur 15' verdeckt, oberhalb der porösen, plattenförmigen Struktur 15' angeordnet. Siehe zum Beispiel Figuren 22-24. Die Schüttung 18 liegt also zunächst nicht direkt auf der porösen, plattenförmigen Struktur 15' auf, sondern liegt zunächst auf der Schieberplatte 28" auf. Wie in Figur 25 gezeigt, können die Öffnungen der porösen, plattenförmigen Struktur 15' von der Schieberplatte 28" freigegeben werden, um ein zumindest teilweises Entpacken des Bauteils 16 zu ermöglichen; siehe Figur 26. Später kann die Schieberplatte 28' wieder in ihre Ausgangsposition zurück bewegt werden; siehe Figur 28.

Im Folgenden wird das mindestens eine entpackte Bauteil 16 noch aus dem Hilfsrahmen 20 entfernt. Dies kann zum Beispiel mittels der optionalen Bauteil-Übergabestation 40 erfolgen.

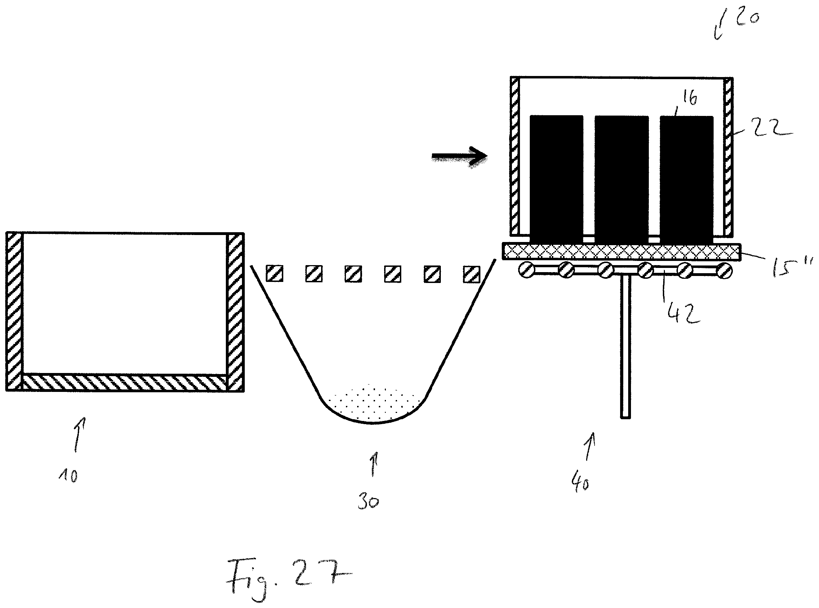

Die in diesem Zusammenhang in den Figuren 27 und 28 angedeuteten Schritte entsprechen dabei im Wesentlichen den in den Figuren 12 und 13 bzw. 20 und 21 veranschaulichten Schritten.

Gemäß einer nicht gezeigten, weiteren Ausführungsform kann das Entpackverfahren zum Beispiel ohne (interne oder externe) poröse, plattenförmige Struktur 15 bzw. 15' durchgeführt werden. Hierzu kann zum Beispiel eine Anordnung gewählt werden, die im Wesentlichen der aus Figur 14 entspricht, wobei die poröse, plattenförmige Struktur 15' und die Schieberplatte 28' eingespart/weggelassen werden. Der Hilfsrahmen 20 kann dabei nach Übergabe der Schüttung 18 samt Bauteil 16 nach rechts über die Partikelmaterial-Auffangvorrichtung 30 bewegt werden (wie in den Figuren 16 und 17 angedeutet, jedoch ohne poröse, plattenförmige Struktur 15' und Schieberplatte 28'). Die poröse Partikelmaterial-Ablass-Struktur 32 der Partikelmaterial-Auffangvorrichtung 30 kann dabei die Bauteile zurückhalten, so dass diese anschließend einfach von der porösen Partikelmaterial-Ablass-Struktur 32 entnommen werden können, zum Beispiel durch die obere Öffnung des Hilfsrahmens 20 oder nachdem der Hilfsrahmen 20 nach oben weg bewegt wurde (in diesem Fall kann der Hilfsrahmen zum Beispiel anders oder gar nicht geführt sein).

Gemäß einer weiteren, nicht gezeigten Ausführungsform kann der Hilfsrahmen 20 zum Beispiel seitlich über eine höhenverstellbare Plattform bewegt werden. Die höhenverstellbare Plattform kann dabei in Figur 14 die gesamte Anordnung aus Partikelmaterial-Auffangvorrichtung 30, poröser Struktur 15' und Schieberplatte 28' ersetzen, und kann anfangs nach oben gefahren sein. Wird die Plattform nach unten abgesenkt, so kann das Partikelmaterial seitlich abrieseln. Zusätzlich kann das Partikelmaterial zum Beispiel seitlich abgeblasen und/oder abgesaugt und/oder abgebürstet/abgefegt werden.

Gemäß einer noch weiteren, nicht gezeigten Ausführungsform kann der Hilfsrahmen 20 zum Beispiel seitlich auf einen Entpack-Tisch bewegt werden, woraufhin der Hilfsrahmen 20 einfach nach oben hin weg bewegt wird, so dass die Schüttung 18 zur Seite hin "auseinanderfällt", woraufhin die Bauteile 16 entnommen werden können.

Gemäß einer noch weiteren, nicht gezeigten Ausführungsform kann der Hilfsrahmen 20 zum Beispiel seitlich vertikal über eine Rutsche bewegt werden, die in ein Auffangbecken mündet, so dass die Schüttung 18 samt Bauteil entlang der Rutsche in das Auffangbecken rieselt/rutscht, woraufhin die Bauteile 16 aus dem Auffangbecken entnommen werden können.

Wie aus der obigen Beschreibung ersichtlich, gibt es zahlreiche Möglichkeiten, das in dem Hilfsrahmen aufgenommene Bauteil zumindest teilweise aus der Partikelmaterial-Schüttung zu entpacken und aus dem Hilfsrahmen zu entfernen (wie aus der obigen Beschreibung ersichtlich, kann das "Entpacken" und das "Entfernen" gleichzeitig, überlappend oder getrennt voneinander ablaufen). Der Transfer der Partikelmaterial-Schüttung aus der Baubox in den Hilfsrahmen ermöglicht dabei ein schnelles Freiwerden der Baubox, und zudem kann das in dem Hilfsrahmen aufgenommene Bauteil auf einfache, zuverlässige und schnelle Art und Weise zumindest teilweise aus der Partikelmaterial-Schüttung entpackt werden. Ein Umbau der Baubox ist dabei nicht erforderlich.

Die vorhergehende Beschreibung von spezifischen beispielhaften Ausführungsformen wurde präsentiert zum Zwecke der Illustration und Beschreibung. Sie soll nicht erschöpfend sein oder die Erfindung auf die offenbarten genauen Formen einschränken, und selbstverständlich sind viele Modifikationen und Variationen im Lichte der hierin offenbarten Lehre möglich. Der Schutzumfang wird durch die hieran angehängten Ansprüche.

## Patentansprüche

1. Verfahren zum Entpacken eines mittels eines generativen Fertigungsverfahrens hergestellten Bauteils (16) aus einer Partikelmaterial-Schüttung (18) aus nicht-verfestigtem Partikelmaterial, welche gemeinsam mit dem Bauteil in einem Aufnahmeraum angeordnet ist, der umfangsseitig von einer nach oben hin offenen, vertikalen Umfangswandstruktur (12) einer Baubox (10) begrenzt wird, in der eine höhenverstellbare Bauplattform (14) aufgenommen ist, auf der die das Bauteil enthaltende Partikelmaterial-Schüttung angeordnet ist,
wobei das Verfahren **dadurch gekennzeichnet ist, dass**:
ein Hilfsrahmen (20), der eine nach unten hin offene, vertikale Umfangswandstruktur (22) hat und eingerichtet ist, um die das Bauteil (16) enthaltende Partikelmaterial-Schüttung (18) aufzunehmen, vertikal über der vertikalen Umfangswandstruktur (12) der Baubox (10) angeordnet wird,
die Bauplattform (14) nach oben gefahren wird, so dass die das Bauteil (16) enthaltende Partikelmaterial-Schüttung (18) von der Baubox (10) an den Hilfsrahmen (20) übergeben wird und in letzterem aufgenommen ist,
der Hilfsrahmen (20) mit der darin aufgenommenen, das Bauteil (16) enthaltenden Partikelmaterial-Schüttung (18) und die Baubox (10) voneinander weg bewegt werden, so dass letztere frei für einen nächsten Baujob ist, und
das Bauteil (16) zumindest teilweise aus der Partikelmaterial-Schüttung (18) entpackt und aus dem Hilfsrahmen (20) entfernt wird.

2. Verfahren nach Anspruch 1, wobei
zwischen der Bauplattform (14) und der das Bauteil (16) enthaltenden Partikelmaterial-Schüttung (18) eine plattenförmige Struktur, zum Beispiel eine poröse plattenförmige Struktur (15), in der Baubox (10) angeordnet ist, und
die plattenförmige Struktur zusammen mit der darauf angeordneten, das Bauteil (16) enthaltenden Partikelmaterial-Schüttung (18) von der Baubox (10) an den Hilfsrahmen (20) übergeben wird und zusammen mit der Partikelmaterial-Schüttung (18) und dem Hilfsrahmen (20) von der Baubox (10) weg relativbewegt wird, zum Beispiel in eine Position vertikal über einer Partikelmaterial-Auffangvorrichtung (30).

3. Verfahren nach Anspruch 1 oder 2, wobei der Hilfsrahmen (20) mit der darin aufgenommenen, das Bauteil (16) enthaltenden Partikelmaterial-Schüttung (18) und die Baubox (10) seitlich voneinander weg relativbewegt werden, zum Beispiel durch seitliches Bewegen des Hilfsrahmens (20) mit der darin aufgenommenen, das Bauteil (16) enthaltenden Partikelmaterial-Schüttung (18), zum Beispiel entlang einer Führungsstruktur (24).

4. Verfahren nach Anspruch 3, wobei der Hilfsrahmen (20) mit der darin aufgenommenen, das Bauteil (16) enthaltenden Partikelmaterial-Schüttung (18) vertikal über einer plattenförmigen Struktur, zum Beispiel einer porösen plattenförmige Struktur (15'), angeordnet wird.

5. Verfahren nach Anspruch 4, wobei
die plattenförmige Struktur über einer Partikelmaterial-Auffangvorrichtung (30) angeordnet ist oder
der Hilfsrahmen (20) mit der darin aufgenommenen, das Bauteil (16) enthaltenden Partikelmaterial-Schüttung (18) zunächst über die plattenförmige Struktur und anschließend mit der plattenförmigen Struktur über die Partikelmaterial-Auffangvorrichtung (30) bewegt wird.

6. Verfahren nach Anspruch 4 oder 5, wobei Durchgangsöffnungen der porösen, plattenförmigen Struktur (15') während einer seitlichen Relativbewegung zwischen dem Hilfsrahmen (20) und der porösen, plattenförmigen Struktur (15') mit Partikelmaterial gefüllt werden/sind und/oder verdeckt werden, um ein Ablassen von Partikelmaterial aus dem Hilfsrahmen (20) zu reduzieren.

7. Verfahren nach einem der vorangehenden Ansprüche, wobei die das Bauteil (16) enthaltende Partikelmaterial-Schüttung (18) beim zumindest teilweisen Entpacken des Bauteils aus der Partikelmaterial-Schüttung auf einer porösen, plattenförmigen Struktur (15, 15'), zum Beispiel der porösen, plattenförmigen Struktur aus einem der Ansprüche 2 bis 6, angeordnet ist, die zum Beispiel über einer Partikelmaterial-Auffangvorrichtung (30) angeordnet ist.

8. Verfahren nach Anspruch 7, wobei das zumindest teilweise entpackte Bauteil (16) zusammen mit der porösen, plattenförmigen Struktur (15, 15') und dem Hilfsrahmen (20) zu einer Bauteil-Übergabestation (40) bewegt wird, wo das Bauteil und die poröse, plattenförmige Struktur von dem Hilfsrahmen getrennt werden und von wo aus das Bauteil zum Beispiel einem Bauteil-Vorrat (50) zugeführt wird, zum Beispiel gemeinsam mit der porösen, plattenförmigen Struktur.

9. Verfahren nach einem der vorangehenden Ansprüche, wobei die Baubox (10) zu Beginn des Verfahrens in einer Baubox-Entpackungs-Position neben einer Partikelmaterial-Auffangvorrichtung (30) angeordnet ist/wird, und wobei der Hilfsrahmen (20) von der Baubox-Entpackungs-Position zu der Partikelmaterial-Auffangvorrichtung, optional über die Partikelmaterial-Auffangvorrichtung weiter zu der Übergabestation (40) aus Anspruch 8, entlang einer Führungsstruktur (24) verfahrbar ist / verfahren wird.

10. Verfahren nach einem der vorangehenden Ansprüche, wobei:
die vertikale Umfangswandstruktur (22) des Hilfsrahmens (20) zusätzlich nach oben hin offen ist und/oder
die vertikale Umfangswandstruktur (22) des Hilfsrahmens (20) eine Höhe hat, die größer oder gleich der Höhe der vertikalen Umfangswandstruktur (12) der Baubox (10) ist, und/oder
ein von der vertikalen Umfangswandstruktur (22) des Hilfsrahmens (20) begrenzter Raum und ein von der vertikalen Umfangswandstruktur (12) der Baubox (10) begrenzter Raum im horizontalen Schnitt die gleiche Form und/oder die gleiche Größe haben und/oder
der Hilfsrahmen (20) mit einer Reinigungsvorrichtung (26) ausgestattet ist, die eingerichtet ist, um die nach oben gefahrene Bauplattform (14) zu reinigen, während der Hilfsrahmen mit der darin aufgenommenen, das Bauteil enthaltenden Partikelmaterial-Schüttung relativ zu der Baubox (10) seitlich bewegt wird.

11. Verfahren nach einem der vorangehenden Ansprüche, wobei das Anordnen des Hilfsrahmens über der vertikalen Umfangswandstruktur der Baubox und/oder das nach oben Fahren der Bauplattform und/oder das voneinander Weg-Bewegen von Hilfsrahmen und Baubox und/oder das zumindest teilweise Entpacken des Bauteils und/oder das voneinander Entfernen von Bauteil und Hilfsrahmen und/oder ein anfängliches Anordnen der Baubox in einer Baubox-Entpackungs-Position neben einer Partikelmaterial-Auffangvorrichtung und/oder ein Bewegen des entpackten Bauteils zusammen mit der porösen, plattenförmigen Struktur und dem Hilfsrahmen zu einer Bauteil-Übergabestation und/oder ein Trennen des Bauteils und der porösen, plattenförmigen Struktur von dem Hilfsrahmen und/oder ein Zuführen des entpackten Bauteils an einen Bauteil-Vorrat automatisiert abläuft.

12. Verfahren zum Herstellen eines oder mehrerer Bauteile (16) mittels eines generativen Fertigungsverfahrens in Kombination mit einem Verfahren zum Entpacken der derart hergestellten Bauteile nach einem der vorangehenden Ansprüche,
wobei bei dem generativen Fertigungsverfahren in dem von der Baubox (10) gebildeten Bauraum sämtliche Bauteile (16) in der Draufsicht nebeneinander, z.B. in einer einzigen horizontalen Bauteil-Lage, hergestellt werden und/oder
wobei das Bauteil (16) bzw. eines oder mehrere oder alle der Bauteile eine jeweilige Stütz- oder Haltestruktur aufweisen, die bei dem generativen Fertigungsverfahren zusammen mit dem jeweiligen Bauteil mitausgebildet wird, wodurch beim Entpacken der Bauteile, zum Beispiel wenn nicht-verfestigtes Partikelmaterial nach unten hin aus dem Hilfsrahmen abgelassen wird, eine Beschädigung des jeweiligen Bauteils und/oder ein Zulegen einer oder mehrerer Öffnungen durch das Bauteil verhindert wird.

13. Verfahren zum Herstellen eines oder mehrerer Bauteile (16) mittels eines generativen Fertigungsverfahrens in Kombination mit einem Verfahren zum Entpacken der derart hergestellten Bauteile nach einem der Ansprüche 1 bis 11, wobei die ein oder mehreren Bauteile in einem Bauraum gefertigt werden, der umfangsseitig von einer nach oben hin offenen, vertikalen Umfangswandstruktur (12) einer mobilen Baubox (10) begrenzt ist, wobei in der Baubox (10) eine höhenverstellbare Bauplattform (14) aufgenommen ist, die im Verlauf des Fertigungsverfahrens nach unten abgesenkt wird, um mit dem Fertigungsverfahren über der Bauplattform eine das Bauteil enthaltende Partikelmaterial-Schüttung (18) aufzubauen, **dadurch gekennzeichnet, dass**
vor dem Bauprozess auf der Bauplattform (14) der mobilen Baubox (10) eine plattenförmige Struktur (15), welche zum Beispiel porös ausgebildet ist, angeordnet wird, die zum Entpacken der ein oder mehreren Bauteile nach deren Fertigung durch ein nach oben Fahren der Bauplattform zusammen mit der das Bauteil enthaltenden Partikelmaterial-Schüttung aus der Baubox entnehmbar und in einen Hilfsrahmen (20) überführbar ist.

14. Vorrichtung (100) zum Entpacken eines mittels eines generativen Fertigungsverfahrens hergestellten Bauteils (16) aus einer Partikelmaterial-Schüttung (18) aus nicht-verfestigtem Partikelmaterial, welche gemeinsam mit dem Bauteil in einem Aufnahmeraum angeordnet ist, der umfangsseitig von einer nach oben hin offenen, vertikalen Umfangswandstruktur (12) einer mobilen Baubox (10) begrenzt wird, in der eine höhenverstellbare Bauplattform (14) aufgenommen ist, auf der die das Bauteil enthaltende Partikelmaterial-Schüttung angeordnet ist, und die in eine Baubox-Entpackungs-Position verfahrbar ist, wobei die Vorrichtung aufweist:
einen Hilfsrahmen (20), der eine nach unten hin offene, vertikale Umfangswandstruktur (22) hat und der entlang einer Führungsstruktur (24) von einer ersten Position, in der er vertikal über der vertikalen Umfangswandstruktur (12) einer in ihre Baubox-Entpackungs-Position gefahrenen mobilen Baubox (10) angeordnet ist, zu einer zweiten Position verfahrbar ist, und
eine Partikelmaterial-Auffangvorrichtung (30), die vertikal unterhalb des Hilfsrahmens (20) angeordnet ist, wenn dieser sich in der zweiten Position befindet.

15. Vorrichtung (100) nach Anspruch 14, ferner aufweisend:
eine Bauteil-Übergabestation (40), wobei der Hilfsrahmen (20) entlang der Führungsstruktur (24) von der ersten Position über die zweite Position zu der dritten Position verfahrbar ist, und wobei der Hilfsrahmen in der dritten Position vertikal über der Bauteil-Übergabestation angeordnet ist, und/oder
eine Steuerung, die eingerichtet ist, um einen oder mehrere oder alle Schritte des Verfahrens nach einem der Ansprüche 1 bis 11 automatisiert durchzuführen.

## Claims

1. A method for unpacking a component (16) produced by means of a generative manufacturing method from a particulate material fill (18) of unconsolidated particulate material, which fill is arranged in a receiving space together with the component, which receiving space is circumferentially limited by a vertical circumferential wall structure (12) of a construction box (10), which is open in an upward direction, in which a height-adjustable construction platform (14) is received on which the particulate material fill containing the component is arranged,
the method being **characterized in that**:
an auxiliary frame (20) having a vertical circumferential wall structure (22) open in a downward direction and configured to receive the particulate material fill (18) containing the component (16) is arranged vertically above the vertical circumferential wall structure (12) of the construction box (10),
the construction platform (14) is displaced upward, so that the particulate material fill (18) containing the component (16) is transferred from the construction box (10) to the auxiliary frame (20) and is received in the latter,
the auxiliary frame (20) with the particulate material fill (18) containing the component (16), received therein, and the construction box (10) are moved away from each other, so that the latter is free for a following construction job, and
the component (16) is unpacked at least in part from the particulate material fill (18) and is removed from the auxiliary frame (20).

2. The method according to claim 1, wherein
a plate-shaped structure, for example a porous plate-shaped structure (15) is arranged in the construction box (10) between the construction platform (14) and the particulate material fill (18) containing the component (16), and
the plate-shaped structure is transferred from the construction box (10) to the auxiliary frame (20) together with the particulate material fill (18) arranged thereon and containing the component (16), and is relatively moved away from the construction box (10) together with the particulate material fill (18) and the auxiliary frame (20), for example into a position vertically above a particulate material collecting device (30).

3. The method according to claim 1 or 2, wherein the auxiliary frame (20) with the particulate material fill (18) received therein and containing the component (16), and the construction box (10) are relatively moved away from each other laterally, for example by laterally moving the auxiliary frame (20) with the particulate material fill (18) containing the component (16) and received therein, for example along a guiding structure (24).

4. The method according to claim 3, wherein the auxiliary frame (20) with the particulate material fill (18) received therein and containing the component (16) is arranged vertically above a plate-shaped structure, for example a porous plate-shaped structure (15').

5. The method according to claim 4, wherein
the plate-shaped structure is arranged above a particulate material collecting device (30) or
the auxiliary frame (20) with the particulate material fill (18) received therein and containing the component (16) is first moved over the plate-shaped structure and then with the plate-shaped structure over the particulate material collecting device (30).

6. The method according to claim 4 or 5, wherein through-holes of the porous, plate-shaped structure (15') are filled with particulate material and / or covered during a lateral relative movement between the auxiliary frame (20) and the porous, plate-shaped structure (15'), to reduce a discharge of particulate material from the auxiliary frame (20).

7. The method according to any one of the preceding claims, wherein the particulate material fill (18) containing the component (16) is arranged on a porous, plate-shaped structure (15, 15'), for example the porous, plate-shaped structure according to any one of claims 2 to 6, arranged, for example, above a particulate material collecting device (30), during the at least partial unpacking of the component from the particulate material fill.

8. The method according to claim 7, wherein the at least partially unpacked component (16) is moved to a component transfer station (40) together with the porous, plate-shaped structure (15, 15') and the auxiliary frame (20), where the component and the porous, plate-shaped structure are separated from the auxiliary frame, and from where the component is, for example, fed to a component stock (50), for example together with the porous, plate-shaped structure.

9. The method according to any one of the preceding claims, wherein the construction box (10) is arranged in a construction box unpacking position next to a particulate material collecting device (30) at the beginning of the process, and wherein the auxiliary frame (20) is displaceable / displaced from the construction box unpacking position to the particulate material collecting device, optionally via the particulate material collecting device further to the transfer station (40) according to claim 8, along a guiding structure (24).

10. The method according to any one of the preceding claims, wherein:
the vertical circumferential wall structure (22) of the auxiliary frame (20) is additionally open upward, and/or
the vertical circumferential wall structure (22) of the auxiliary frame (20) has a height which is greater than or equal to the height of the vertical circumferential wall structure (12) of the construction box (10), and/or
a space limited by the vertical circumferential wall structure (22) of the auxiliary frame (20) and a space limited by the vertical circumferential wall structure (12) of the construction box (10) have the same shape and/or the same size in a horizontal section, and/or
the auxiliary frame (20) is equipped with a cleaning device (26) which is configured to clean the construction platform (14) displaced upward, while the auxiliary frame is moved laterally relative to the construction box (10) with the particulate material fill containing the component and received therein.

11. The method according to any one of the preceding claims, wherein arranging the auxiliary frame above the vertical circumferential wall structure of the construction box and/or displacing the construction platform upward and/or moving the auxiliary frame and the construction box away from each other and/or at least partially unpacking the component and/or removing the component and the auxiliary frame from each other and/or first arranging the construction box in a construction box unpacking position next to a particulate material collecting device and/or moving the unpacked component together with the porous, plate-shaped structure and the auxiliary frame to a component transfer station and/or separating the component and the porous, plate-shaped structure from the auxiliary frame and/or feeding the unpacked component to a component stock take place in an automated manner.

12. A method for producing one or more components (16) by means of a generative manufacturing process in combination with a method for unpacking the components manufactured in this way according to any one of the preceding claims,
wherein, in the generative manufacturing method, all components (16) are, in a top view, produced next to each other in the construction space formed by the construction box (10), for example in a single horizontal component layer, and/or
wherein the component (16) or one or more or all of the components comprise a respective support or holding structure which in the generative manufacturing method is formed together with the respective component, whereby, when unpacking the components, for example when unconsolidated particulate material is discharged downward from the auxiliary frame, a damaging of the respective component and/or a covering of one or more openings by the component is avoided.

13. A method for producing one or more components (16) by means of a generative manufacturing method in combination with a method for unpacking the components produced in this manner according to any one of claims 1 to 11, wherein the one or more components are produced in a construction space which is circumferentially limited by a vertical circumferential wall structure (12) open upward, of a mobile construction box (10), wherein a height-adjustable construction platform (14) is received in the construction box (10), which is lowered in the course of the manufacturing process, to build a particulate material fill (18) containing the component above the construction platform using the manufacturing method, **characterized in that**
a plate-shaped structure (15) is arranged on the construction platform (14) of the mobile construction box (10) prior to the construction process, which is, for example, configured to be porous, which for unpacking the one or more components after their production can be removed from the construction box by moving the construction platform upward together with the particulate material fill containing the component, and can be transferred into an auxiliary frame (20).

14. A device (100) for unpacking a component (16) produced by means of a generative manufacturing method from a particulate material fill (18) of unconsolidated particulate material, which is arranged in a receiving space together with the component, which space is circumferentially limited by a vertical circumferential wall structure (12) open upward, of a mobile construction box (10), in which a height-adjustable construction platform (14) is received, on which the particulate material fill containing the component is arranged, and which can be moved into a construction box unpacking position, wherein the device comprises:
an auxiliary frame (20) having a vertical circumferential wall structure (22) open downward, and being movable along a guiding structure (24) from a first position, in which it is arranged vertically above the vertical circumferential wall structure (12) of a mobile construction box (10) displaced into its construction box unpacking position, into a second position, and
a particulate material collecting device (30) arranged vertically underneath the auxiliary frame (20) when it is located in the second position.

15. The device (100) according to claim 14, further comprising:
a component transfer station (40), wherein the auxiliary frame (20) is movable along the guiding structure (24) from the first position via the second position into the third position, and wherein the auxiliary frame is arranged vertically above the component transfer station in the third position, and/or
a control device configured to carry out one or more or all steps of the method according to any one of claims 1 to 11 in an automated manner.

## Revendications

1. Procédé pour extraire une pièce (16) fabriquée par un procédé de fabrication générative à partir d'un matériau particulaire en vrac (18) constitué d'un matériau particulaire non compacté, qui est disposé conjointement avec la pièce dans un espace de logement qui est limité du côté de sa périphérie par une structure de paroi circonférentielle (12) verticale et ouverte vers le haut, d'une enceinte de construction (10), dans laquelle une plateforme de construction (14) réglable en hauteur est logée, sur laquelle le matériau particulaire en vrac contenant la pièce est disposé,
le procédé étant **caractérisé en ce que** :
un châssis support (20) ayant une structure de paroi circonférentielle (22) verticale, ouverte vers le bas, et conçu de façon à loger le matériau particulaire en vrac (18) contenant la pièce (16) est disposé verticalement au-dessus de la structure de paroi circonférentielle (12) verticale de l'enceinte de construction (10),
la plateforme (14) est déplacée vers le haut, de sorte que le matériau particulaire en vrac (18) contenant la pièce (16) est transmis de l'enceinte de construction (10) au châssis support (20) et est logé dans ce dernier,
le châssis support (20) avec le matériau particulaire en vrac (18) contenant la pièce (16) et l'enceinte de construction (10) sont éloignés l'un de l'autre, de sorte que la dernière soit libre pour une nouvelle tâche de construction, et
la pièce (16) est extraite au moins partiellement du matériau particulaire en vrac (18) et est enlevée du châssis support (20).

2. Procédé selon la revendication 1, dans lequel
une structure en forme de plaque, par exemple une structure en forme de plaque (15) poreuse est disposée dans l'enceinte de construction (10) entre la plateforme de construction (14) et le matériau particulaire en vrac (18) contenant la pièce (16), et
la structure en forme de plaque est transmise conjointement avec le matériau particulaire en vrac (18) contenant la pièce (16), disposé là-dessus, de l'enceinte de construction (10) au châssis support (20), et est déplacée relativement en s'éloignant de l'enceinte de construction (10), conjointement avec le matériau particulaire en vrac (18) et le châssis support (20), par exemple vers une position verticalement au-dessus d'un dispositif collecteur de matériau particulaire (30).

3. Procédé selon la revendication 1 ou 2, dans lequel le châssis support (20) avec le matériau particulaire en vrac (18) contenant la pièce (16), logé là-dedans, et l'enceinte de construction (10) sont déplacés relativement latéralement en s'éloignant l'un de l'autre, par exemple en déplaçant latéralement le châssis support (20) avec le matériau particulaire en vrac (18) contenant la pièce (16), logé là-dedans, par exemple le long d'une structure de direction (24).

4. Procédé selon la revendication 3, dans lequel le châssis support (20) avec le matériau particulaire en vrac (18) contenant la pièce (16), logé là-dedans, est disposé verticalement au-dessus d'une structure en forme de plaque, par exemple une structure en forme de plaque poreuse (15').

5. Procédé selon la revendication 4, dans lequel :
la structure en forme de plaque est disposée au-dessus d'un dispositif collecteur de matériau particulaire (30), ou
le châssis support (20) avec le matériau particulaire en vrac (18) contenant la pièce (16), logé là-dedans, est déplacé d'abord à travers la structure en forme de plaque et ensuite avec la structure en forme de plaque à travers le dispositif collecteur de matériau particulaire (30).

6. Procédé selon la revendication 4 ou 5, dans lequel des ouvertures traversantes de la structure en forme de plaque poreuse (15') sont remplies de matériau particulaire et/ou couvertes au cours d'un déplacement relatif latéral entre le châssis support (20) et la structure en forme de plaque poreuse (15'), afin de réduire un déversement de matériau particulaire du châssis support (20).

7. Procédé selon l'une quelconque des revendications précédentes, dans lequel le matériau particulaire en vrac (18) contenant la pièce (16) est disposé sur une structure en forme de plaque poreuse (15, 15') pendant l'extraction au moins partielle de la pièce à partir du matériau particulaire en vrac, par exemple la structure en forme de plaque poreuse selon l'une quelconque des revendications 2 à 6, qui est par exemple disposée au-dessus d'un dispositif collecteur de matériau particulaire (30).

8. Procédé selon la revendication 7, dans lequel la pièce (16) extraite au moins partiellement est déplacée vers une station de transmission de pièce (40) avec la structure en forme de plaque poreuse (15, 15') et le châssis support (20), où la pièce et la structure en forme de plaque poreuse sont séparées du châssis support, et à partir d'où la pièce est par exemple amenée à un stock de pièces (50), par exemple conjointement avec la structure en forme de plaque poreuse.

9. Procédé selon l'une quelconque des revendications précédentes, dans lequel l'enceinte de construction (10) est disposée dans une position d'extraction d'enceinte de construction à côté d'un dispositif collecteur de matériau particulaire (30) au début du procédé, et dans lequel le châssis support (20) est déplacé / déplaçable de la position d'extraction d'enceinte de construction au dispositif collecteur de matériau particulaire, optionnellement à travers le dispositif collecteur de matériau particulaire et jusqu'à la station de transmission (40) selon la revendication 8, le long d'une structure de direction (24).

10. Procédé selon l'une quelconque des revendications précédentes, dans lequel :
la structure de paroi circonférentielle (22) verticale du châssis support (20) est en plus ouverte vers le haut, et/ou
la structure de paroi circonférentielle (22) verticale du châssis support (20) a une hauteur qui est supérieure ou égale à la hauteur de la structure de paroi circonférentielle (12) de l'enceinte de construction (10), et/ou
un espace limité par la paroi circonférentielle (22) verticale du châssis support (20) et un espace limité par la paroi circonférentielle (12) verticale de l'enceinte de construction (10) ont la même forme et/ou la même taille en coupe horizontale, et/ou
le châssis support (20) est muni d'un dispositif de nettoyage (26) qui est conçu de façon à nettoyer la plateforme de construction (14) déplacée vers le haut pendant que le châssis support est déplacé latéralement relativement à l'enceinte de construction (10) avec le matériau particulaire en vrac contenant la pièce, logé là-dedans.

11. Procédé selon l'une quelconque des revendications précédentes, dans lequel les étapes de disposer le châssis support au-dessus de la structure de paroi circonférentielle verticale de l'enceinte de construction et/ou de déplacer la plateforme de construction vers le haut et/ou d'éloigner le châssis support et l'enceinte de construction l'un de l'autre et/ou d'extraire au moins partiellement la pièce et/ou d'éloigner la pièce et le châssis support l'un de l'autre et/ou de disposer initialement l'enceinte de construction dans une position d'extraction d'enceinte de construction à côté d'un dispositif collecteur de matériau particulaire et/ou de déplacer la pièce extraite avec la structure en forme de plaque poreuse et avec le châssis support vers une station de transmission de pièce et/ou de séparer la pièce et la structure en forme de plaque poreuse du châssis support et/ou d'amener la pièce extraite à un stock de pièces se déroule/déroulent de façon automatisée.

12. Procédé de fabrication d'une ou plusieurs pièces (16) moyennant un procédé de fabrication générative en combinaison avec un procédé pour extraire les pièces fabriquées de telle manière selon l'une quelconque des revendications précédentes,
dans lequel, dans le procédé de fabrication générative, toutes les pièces (16) dans l'espace de construction formé par l'enceinte de construction (10) sont fabriquées côte à côte en vue de dessus, par exemple dans une seule couche de pièce horizontale, et/ou
dans lequel la pièce ou bien une ou plusieurs des ou toutes les pièces comportent une structure de support ou de retenue respective, qui est formée conjointement avec la pièce respective dans le procédé de fabrication générative, ainsi qu'un endommagement de la pièce respective et/ou un recouvrement d'une ou plusieurs ouvertures par la pièce est évité lors de l'extraction des pièces, par exemple lorsque du matériau particulaire non compacté est déversé du châssis support vers le bas.

13. Procédé de fabrication d'une ou plusieurs pièces (16) moyennant un procédé de fabrication générative en combinaison avec un procédé pour extraire les pièces fabriquées de telle manière selon l'une quelconque des revendications 1 à 11, dans lequel l'une ou les plusieurs pièces sont fabriquées dans un espace de construction qui est limité du côté de sa périphérie par une structure de paroi circonférentielle (12) verticale et ouverte vers le haut, d'une enceinte de construction (10) mobile, une plateforme de construction (14) réglable en hauteur étant logée dans l'enceinte de construction (10), qui est baissée vers le bas au cours du procédé de fabrication, afin de construire un matériau particulaire en vrac (18) contenant la pièce au-dessus de la plateforme de construction moyennant le procédé de fabrication, **caractérisé en ce que**
une structure en forme de plaque (15) qui est par exemple formée de manière poreuse est disposée sur la plateforme de construction (14) de l'enceinte de construction mobile (10) avant le processus de fabrication, qui, afin d'extraire l'une ou les plusieurs pièces après leur fabrication, peut être enlevée de l'enceinte de construction en déplaçant la plateforme de construction vers le haut avec le matériau particulaire en vrac contenant la pièce et peut être transmise dans un châssis de support (20).

14. Dispositif (100) pour extraire une pièce (16) fabriquée moyennant un procédé de fabrication générative à partir d'un matériau particulaire en vrac (18) constitué d'un matériau particulaire non compacté, qui est disposé dans un espace de logement avec la pièce, lequel espace est limité du côté de sa périphérie par une structure de paroi circonférentielle (12) verticale et ouverte vers le haut, d'une enceinte de construction (10) mobile, dans laquelle une plateforme de construction (14) réglable en hauteur est logée, sur laquelle le matériau particulaire en vrac contenant la pièce est disposé, et qui peut être déplacée vers une position d'extraction d'enceinte de construction, le dispositif comportant :
un châssis support (20) ayant une structure de paroi circonférentielle (22) verticale, ouverte vers le bas, et déplaçable le long d'une structure de direction (24) à partir d'une première position, dans laquelle il est disposé verticalement au-dessus de la structure de paroi circonférentielle (12) verticale d'une enceinte de construction mobile (10) déplacée dans sa position d'extraction d'enceinte de construction, vers une deuxième position, et
un dispositif collecteur de matériau particulaire (30) disposé verticalement au-dessous du châssis support (20) lorsque celui-ci est disposé dans la deuxième position.

15. Dispositif (100) selon la revendication 14, comportant en outre :
une station de transmission de pièce (40), le châssis support (20) étant déplaçable le long de la structure de direction (24) à partir de la première position à travers la deuxième position vers la troisième position, et le châssis support étant disposé verticalement au-dessus de la station de transmission de pièce dans la troisième position, et/ou
un mécanisme de commande conçu de façon à effectuer une ou plusieurs des ou toutes les étapes du procédé selon l'une quelconque des revendications 1 à 11 de manière automatisée.
